# EUROPEAN PATENT APPLICATION

(11) **EP 4 340 429 A1**
(43) Date of publication of application: **20.03.2024**
(21) Application number: 22807069.4
(22) Date of filing: 24.02.2022
(51) Int. Cl.: H04W 16/28, H04W 24/10

(54) **BASE STATION, COMMUNICATION DEVICE, AND COMMUNICATION METHOD**

(30) Priority: 13.05.2021 JP 2021081923
(71) Applicant: Sony Group Corporation, Tokyo 108-0075 (JP)
(72) Inventor: TAKANO Hiroaki, Tokyo 108-0075 (JP)
(74) Representative: Witte, Weller & Partner Patentanwälte mbB
(86) International application number: PCT/JP2022/007454
(87) International publication number: WO 2022/239362

(57) **Abstract**

High-quality communication is achieved between a base station and a communication device.

A base station of the present disclosure includes: a transmission unit configured to transmit setting information that gives an instruction on measurement of received power of a first reference signal for interference measurement transmitted using each of a plurality of first resources; and a reception unit configured to receive first report information that includes information specifying, among the plurality of first resources, a second resource for which the received power is lower than or equal to a threshold value or is relatively low.

## Description

### TECHNICAL FIELD

The present disclosure relates to a base station, a communication device, and a communication method.

### BACKGROUND ART

A service called local fifth generation (5G) or private 5G is known as a cellular communication service performed in a limited area such as a factory, an office, a studio, a hospital, or a university. This service may also be referred to as a non-public network. Limiting the service area to a local area has an advantage of providing a customized cellular service. Many use cases are where there exists an important communication to be protected within the local area. For example, in the case of a factory, there is a device that should not cause a communication failure for the production line of the factory. In the case of a hospital, a communication used for surgery should not cause a communication failure. In the case of a university, in a case where classes are distributed online, that communication is a communication to be protected in preference to other communications. Thus, for communications in the local area, there are applications where specific very important communications should be protected.

Communications based on standards such as Wi-Fi communication and 802.11a, b, g, n, ac have been used as the communications in the local area. Although Wi-Fi and other communications have an advantage of good performance, an access point is not equipped with a scheduler that adjusts a resource among different users, and hence traffic among users is multiplexed using a contention-based method based on carrier sensing called Listen Before Talk (LBT). User packets collide frequently. Therefore, there is a demand for using cellular communication also in the local area in a case where there is a plurality of users, because cellular communication can retain better quality.

A 5G base station can perform beamforming. In beamforming, a desirable beam is determined between the base station and a terminal by a procedure called beam management, and data is transmitted using the beam. In beamforming, interference control is performed so that beams provided by adjacent base stations do not interfere with each other. However, interference control may be difficult due to various factors such as a positional relationship between the base station and the terminal, the direction and beam width of the beam generated by the base station, and the like. In communication in the local area, there exists a communication that is highly important, thus requiring the quality of the communication to be maintained even in a case where beamforming is used.

### CITATION LIST

### NON-PATENT DOCUMENT

Non-Patent Document 1: 3GPP TSG R_AN WG1 Meeting #95 R1-1812921 Spokane, USA, November 12th - 16th, 2018

### SUMMARY OF THE INVENTION

### PROBLEMS TO BE SOLVED BY THE INVENTION

The present disclosure provides a base station, a communication device, and a communication method that achieve high-quality communication between a base station and a communication device.

### SOLUTIONS TO PROBLEMS

A base station of the present disclosure includes: a transmission unit configured to transmit setting information that gives an instruction on measurement of received power of a first reference signal for interference measurement transmitted using each of a plurality of first resources; and a reception unit configured to receive first report information that includes information specifying, among the plurality of first resources, a second resource for which the received power is lower than or equal to a threshold value or is relatively low.

A communication method of the present disclosure includes: transmitting setting information that gives an instruction on measurement of received power of a first reference signal for interference measurement transmitted using each of a plurality of first resources; and receiving first report information that includes information specifying, among the plurality of first resources, a second resource for which the received power is lower than or equal to a threshold value or is relatively low.

A communication device of the present disclosure includes: a reception unit configured to receive setting information that gives an instruction on measurement of received power of a first reference signal for interference measurement transmitted using each of a plurality of first resources; a control unit configured to measure received power of the first reference signal transmitted using the first resource; and a transmission unit configured to detect a second resource for which the received power is less than or equal to a threshold value or is relatively low among the plurality of first resources, the transmission unit being configured to transmit first report information that includes information specifying the second resource.

A communication method of the present disclosure includes: receiving setting information that gives an instruction on measurement of received power of a first reference signal for interference measurement transmitted using each of a plurality of first resources; measuring received power of the first reference signal transmitted using the first resource; and detecting a second resource for which the received power is less than or equal to a threshold value or is relatively low among the plurality of first resources, and transmitting first report information that includes information specifying the second resource.

### BRIEF DESCRIPTION OF DRAWINGS

Fig. 1 is a sequence diagram illustrating an example of a procedure of beam management.
Fig. 2 is a diagram schematically illustrating beam sweeping performed in the procedure of the beam management procedure.
Fig. 3 is a diagram illustrating an example in which tilting between a base station and a terminal is large.
Fig. 4 is a diagram illustrating an example in which the tilting between the base station and the terminal is small.
Fig. 5 is a diagram of an excerpt from 3GPP Rel16 38.214 Section 5.2.1.
Fig. 6 is a diagram of an excerpt from a report configuration in Rel16 TS38.331 Section 6.3.2.
Fig. 7 is a diagram of an excerpt from a setting of a resource configuration in Rel16 TS38.331 Section 6.3.2.
Fig. 8 is a diagram schematically illustrating an example of a communication system according to an embodiment of the present disclosure.
Fig. 9 is a block diagram illustrating an example of a base station according to the embodiment of the present disclosure.
Fig. 10 is a block diagram illustrating an example of a terminal according to the embodiment of the present disclosure.
Fig. 11 is a diagram schematically illustrating an operation example of a base station and a terminal in Specific Example 1.
Fig. 12 is a diagram schematically illustrating an example of detecting an interference beam with a received power value less than or equal to a threshold value.
Fig. 13 is a view illustrating a setting example of a report configuration.
Fig. 14 is a diagram illustrating a setting example of a resource configuration.
Fig. 15 is a diagram illustrating an example of a specification of an operation method for a terminal in Specific Example 1.
Fig. 16 is a diagram schematically illustrating an example of detecting an interference beam with a received power value less than or equal to a threshold value that is lower than a received power value of a desired beam by a certain value ΔD.
Fig. 17 is a view illustrating a setting example of a report configuration.
Fig. 18 is a diagram illustrating a setting example of a resource configuration.
Fig. 19 is a diagram illustrating an example of a specification of an operation method for a terminal in Specific Example 2.
Fig. 20 is a sequence diagram illustrating an example of a procedure performed between a base station and a terminal in Specific Example 2.
Fig. 21 is a diagram schematically illustrating a correspondence relationship between a beam that may be selected as a desired beam by a base station in a second embodiment and a received beam used by a terminal to receive the beam.
Fig. 22 is a diagram illustrating an example of setting a report configuration for a terminal-side beam status according to the second embodiment.
Fig. 23 is a diagram illustrating an example of setting a resource configuration for a low interference beam according to a second embodiment.
Fig. 24 is a diagram illustrating an example of a specification of an operation method for a terminal according to the second embodiment.
Fig. 25 is a sequence diagram illustrating an example of a procedure performed between a base station and a terminal according to the second embodiment.

### MODE FOR CARRYING OUT THE INVENTION

Hereinafter, embodiments of the present disclosure will be described in detail with reference to the drawings. In one or more embodiments shown in the present disclosure, elements included in each of the embodiments can be combined with each other, and the combined result also forms a part of the embodiments described in the present disclosure.

Hereinafter, the technical background of the present embodiment will be described.

First, beamforming performed in local 5G and its problems will be described.

As described in BACKGROUND ART, a 5G base station can communicate with a terminal using a beam (e.g., a directed reference signal (e.g., CSI-RS)) by performing a procedure called beam management with the terminal. Hereinafter, the term "beam" may refer to a directed reference signal (e.g., CSI-RS) or simply a reference signal (e.g., CSI-RS).

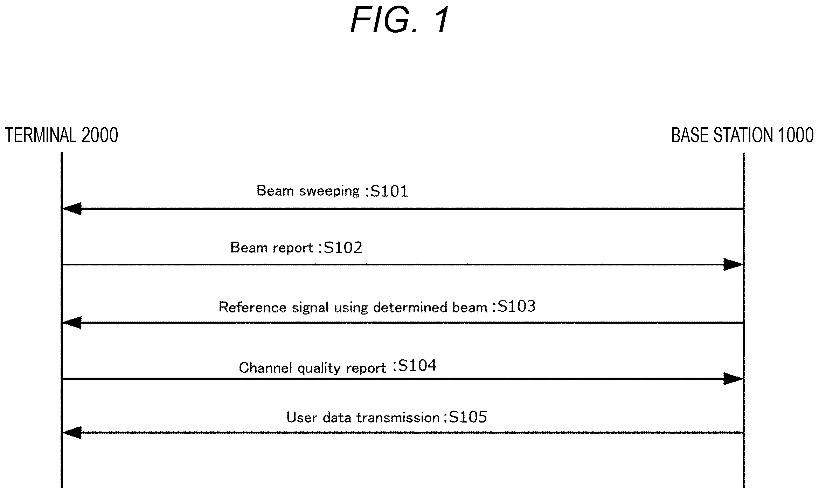

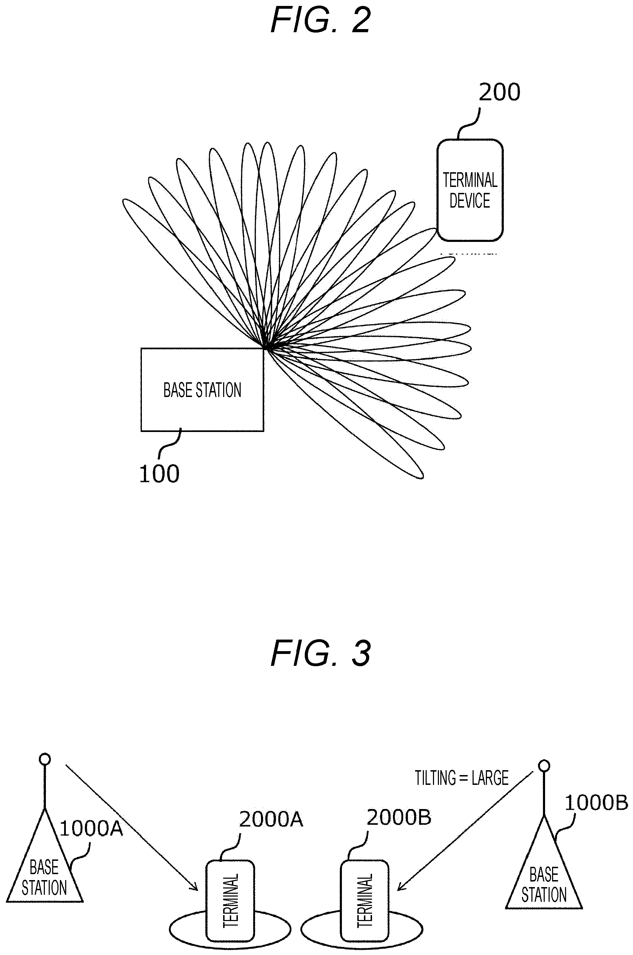

Fig. 1 is a sequence diagram illustrating an example of a beam management procedure. Fig. 2 is a diagram schematically illustrating beam sweeping performed in the beam management procedure.

In Fig. 1, a base station 1000 sequentially transmits a plurality of beams by beam sweeping (S101), and receives a report of a beam measurement result (e.g., Measurement Report including a desired beam desired to be used) from a terminal 2000 (S102). The base station 1000 transmits a reference signal for communication quality measurement to the terminal 2000 through the desired beam (S103). The base station 1000 receives a report indicating the channel quality (communication quality) of the beam from the terminal 2000 (S104). The base station 1000 determines parameters such as a modulation scheme and a coding scheme on the basis of the channel quality, and transmits data (user data) to the terminal 2000 through the determined beam (S105).

In a public network in outdoor areas, beams provided by adjacent base stations with partially overlapping cells (coverage) are controlled so as not to interfere with each other. In a public network, base stations are installed in high locations, and the angle from the base station looking down at the terminal (tilting) is large. This enables interference with an adjacent cell to be controlled to a small degree.

Fig. 3 illustrates an example in which tilting between a base station 1000A and a terminal 2000A and tilting between a base station 1000B adjacent to the base station 1000A and a terminal 2000B are large.

On the other hand, in a network in a local area, the installed base station may not be able to ensure the installation height.

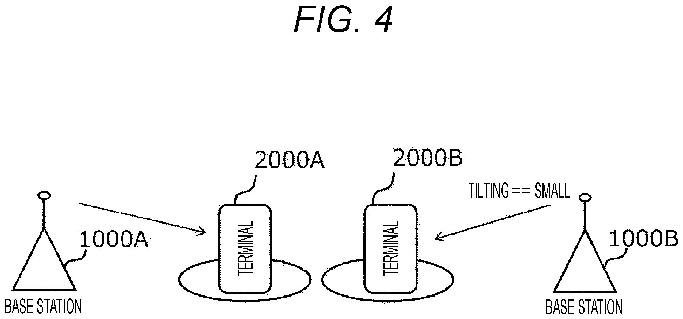

Fig. 4 illustrates an example in which the tilting between the base station 1000A and the terminal 2000A and the tilting between the base station 1000B adjacent to the base station 1000A and the terminal 2000B are small.

In a case where the tilting is small as illustrated in Fig. 4, interference between adjacent cells may be large. In a case where a beam is used for communication between a base station and a terminal, not only the distance between the base station and the terminal but also the direction of the beam affects the interference quantity to the terminal. For example, when a beam with a narrow beam width is used, the energy is not dispersed, so that the signal of the beam may pass beyond the terminal, reaching other terminals at a distance. Therefore, the direction of the beam is more greatly related to whether or not interference occurs than the distance from the base station, which makes interference control difficult.

### [Information Obtained by Base Station from Terminal]

Information acquired by the base station 1000 from the terminal 2000 in the beam management described in Fig. 1 will be described.

In the sequence of Fig. 1, by monitoring (measuring the received power of) the beam swept by the base station 1000, the terminal 2000 can select the desirable beam and report information of the selected beam (e.g., an identifier of a reference signal corresponding to the desirable beam (e.g., CRI)) to the base station 1000 (cf. S102 in Fig. 1). The desirable beam is, for example, a beam with high received power on the terminal side.

The 3GPP Rel16 Multiple-Input Multiple-Output (MIMO) work item is designed so that the interference quantity (L1-SINR) between the desirable beam for the terminal and the beam measured while the terminal is receiving the desirable beam can be reported to the base station.

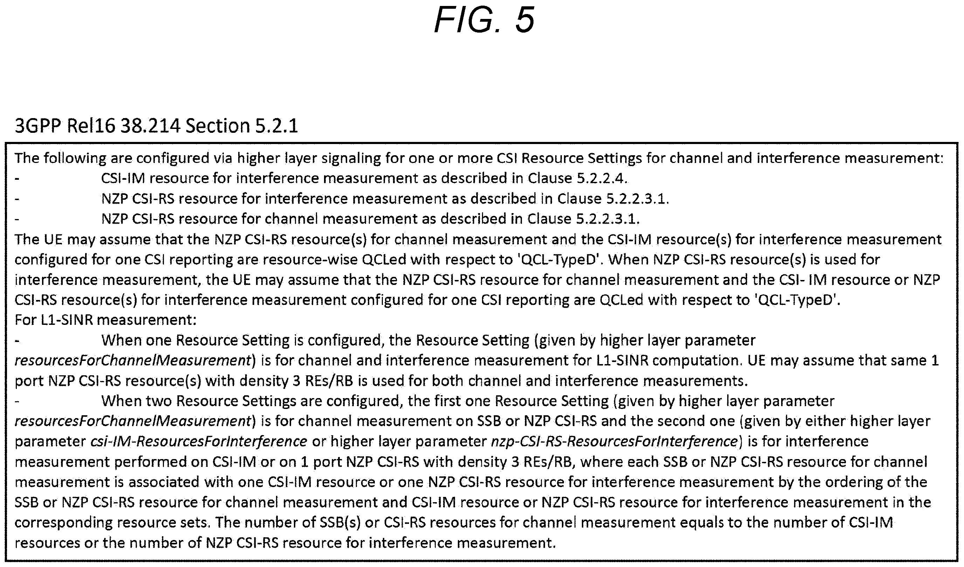

Fig. 5 is an excerpt of a part of 3GPP Rel16 38.214 Section 5.2.1. The measurement of L1-SINR is described.

When measuring L1-SINR, the terminal receives a beam (interference beam) from the base station that is an interference source by using the same received beam as when receiving a desired beam from the base station. The terminal measures the received power of the desired beam (desired power) and the received power of an interference beam (interference power). The terminal calculates a signal-to-interference and noise ratio (SINR) from the desired power and the interference power, and reports the calculated SINR (L1-SINR) to the base station. The report is performed on the basis of the setting of the configuration of the beam report.

### [Conventional Beam Report Configuration]

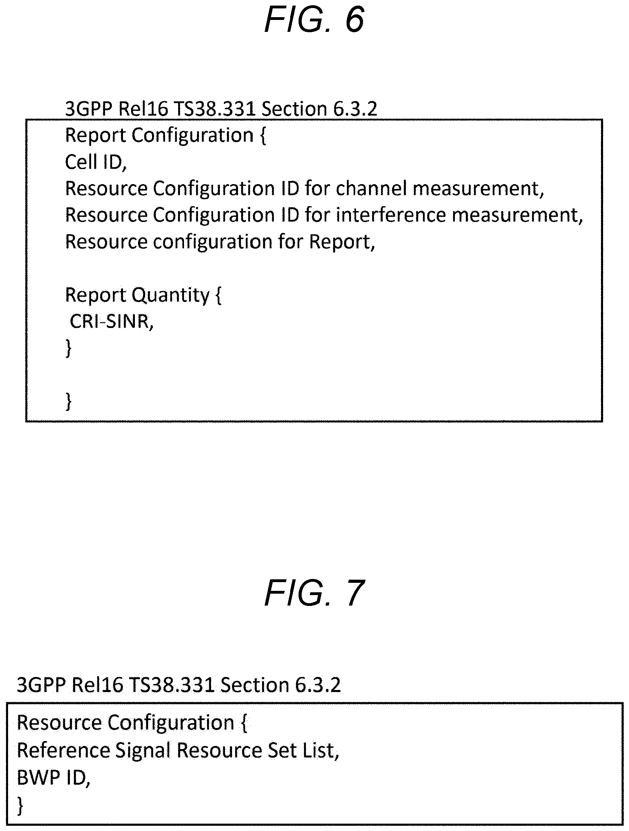

Fig. 6 illustrates an excerpt of a report configuration in Rel16 TS38.331 Section 6.3.2. On the basis of the report configuration, setting is performed in advance from the base station to the terminal for the terminal to monitor (measure the received power of) a plurality of resources set by frequency and time, and report the results of the monitoring. More details are as follows.

In the Cell ID, a resource configuration of which frequency band (Component Carrier) is to be monitored is set.

The Resource configuration ID for channel measurement specifies which resource configuration is monitored to acquire received power of a beam as a candidate (candidate beam) to be used for communication with the terminal.

The Resource configuration ID for interference measurement specifies which resource configuration is monitored to acquire an interference quantity (SINR) with an interference beam.

The Resource configuration for Report specifies which uplink resource is used to report to the base station.

In the Report Quantity, a CRI-SINR is set as the content to be reported to the base station. The CRI-SINR refers to the reporting of the ID of the resource used to transmit the desired beam desired by the terminal, among the candidate beams, as well as the interference quantity (SINR) between the desired beam and the interference beam. In a case where there is a plurality of interference beams, it is conceivable to report all of the plurality of SINRs or representative values such as the maximum value and the minimum value of the plurality of SINRs.

The format of Resource Configuration ID is the same for both Channel measurement and Interference measurement. Note that in both measurements, different resources are specified.

Fig. 7 illustrates an excerpt from a setting of a resource configuration in Rel16 TS38.331 Section 6.3.2. As described above, the same format is used for both channel measurement and interference measurement.

The Reference Signal Resource Set List includes a plurality of reference signal resource sets (RS resource sets) including resources of a plurality of downlink reference signals (DL RSs). That is, a set of resources for transmitting a reference signal is included as a list.

The BWP ID indicates which a Bandwidth Part (BWP) is used. That is, which BWP the above resource belongs to is indicated. The BWP is each part obtained by dividing a component carrier which is a frequency band into partial frequency domains.

On the basis of the settings illustrated in Fig. 6 and Fig. 7, the terminal calculates an SINR for a desired beam, and reports the calculated SINR to the base station.

Note that in the report configurations described with reference to Figs. 6 and 7, after monitoring of a plurality of reference signals arranged in one BWP in one frequency band (component carrier), information of a resource used to transmit a desirable reference signal (RS) (e.g., a resource used to transmit the desired beam, and an identifier (e.g., CRI) of a reference signal corresponding to the desirable beam) is reported together with the SINR. This is not performed by monitoring the reference signals (RS) arranged in a plurality of cells (component carriers) or a plurality of BWPs.

As can be understood from the above description, in the current standard, the base station only has information (e.g., SINR) of a beam that interferes with a specific beam when using the specific beam (desired beam). The base station does not have at least information of a beam that does not cause interference to a specific beam (a beam that is less likely to cause interference or a beam that gives less interference) when using the specific beam. When the base station uses a specific beam, if the base station or another adjacent base station can grasp a large number of pieces of information of beams that do not interfere with the beam, the base station or another adjacent base station can use a beam that does not interfere with the specific beam. For example, in a case where a specific beam and a beam that does not interfere with the specific beam belong to different base stations, it is possible to issue, on the basis of the report of the terminal, a request not to output a beam that interferes with another base station from the base station in which the specific beam exists. However, in the current standard, a method for acquiring information of a beam that does not interfere with a specific beam is not disclosed.

In a case where a plurality of base stations belonging to different operators exists in the same area, it is difficult to solve the problem of beam interference between the base stations by an implementation-dependent method for each operator. The reason is that, in a case where different Public Land Mobile Networks (PLMNs) share the same frequency in the same local area, it is considered difficult to resolve interference between different PLMNs in a gNB (gNodeB)/Transmission Reception Point (TRP) at a Radio Access Network (RAN) level. The function of protecting a specific beam across different PLMNs may require adjustment at the application level. Application-level coordination is also made possible by exchanging information of beams with weak or no interference to a specific beam between base stations. The current standard does not disclose a method in which a base station acquires information of a beam that does not interfere with a specific beam from another base station, or its own base station acquires the information.

### [Summary of Problems in Background Art]

Conventionally, when a base station uses a specific beam (e.g., desired beam), there has been no method for the base station to acquire information of many beams having weak interference with the desired beam. If the base station can acquire all beams with strong interference with a certain beam (without fail), a method for acquiring information of a beam with strong interference is also effective, but it is not practical to acquire all information of the beams with strong interference.

In the embodiments of the present disclosure, the base station achieves the acquisition of information of a beam group having weak interference with a certain beam.

### (First Embodiment)

In the present embodiment, in a case where a base station transmits data (downlink data) to a terminal through a desired beam using a certain resource, a low interference beam that can be used for data transmission to another terminal using the same resource at the same time is efficiently detected. This makes it possible to simultaneously transmit beams to other terminals using the same resource while maintaining the quality of beam transmission to the terminals, thereby improving downlink throughput. Hereinafter, the present embodiment will be described in detail.

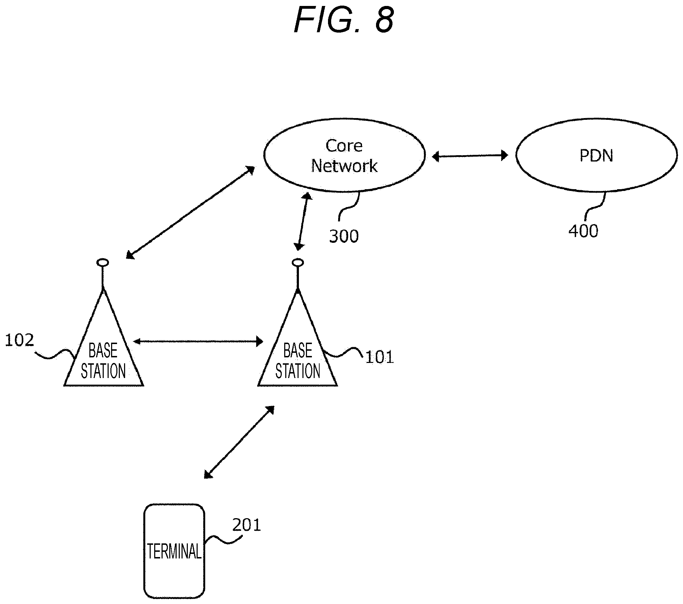

Fig. 8 is a diagram schematically illustrating an example of a communication system according to an embodiment of the present disclosure. The communication system in Fig. 8 includes base stations 101, 102, a terminal 201 (communication device), a core network 300, and a Packet Data Network (PDN) 400. The terminal 201 is a communication device in a cell (coverage) served by the base station 101. The base station 101 and the base station 102 are connected to each other in a wired or wireless manner, and can transmit and receive information using a predetermined interface such as an X2 interface. Although two base stations are illustrated in Fig. 8, three or more base stations may be arranged to be able to transmit and receive information to and from each other. Although one terminal is illustrated, two or more terminals (communication devices) belonging to the base station 101 or the base station 102 may be arranged.

The communication system in Fig. 8 is, for example, a cellular communication system such as Wideband Code Division Multiple Access (W-CDMA), Code Division Multiple Access 2000 (cdma2000), Long-Term Evolution (LTE), and New Radio (NR). "LTE" includes LTE-Advanced (LTEA), LTE-Advanced Pro (LTE-A Pro), and Evolved Universal Terrestrial Radio Access (EUTRA). In addition, "NR" includes New Radio Access Technology (NRAT) and Further EUTRA (FEUTRA). In the present embodiment, the communication system is assumed to be an NR cellular communication system.

NR is the next generation (fifth generation) radio access technology (RAT) of LTE. The NR is a radio access technology that can support various use cases including Enhanced Mobile Broadband (eMBB), Massive Machine Type Communications (mMTC), and Ultra-Reliable and Low Latency Communications (URLLC).

Note that the communication system according to the present disclosure is not limited to the cellular communication system. For example, the communication system may be another wireless communication system such as a wireless Local Area Network (LAN) system, a television broadcasting system, an aviation wireless system, or a space wireless communication system.

Each of the base stations 101, 102 is a communication device that serves a cell and provides wireless services to one or more terminals located within the coverage of the cell. The cell can be served according to any wireless communication scheme such as NR. The base stations 101, 102 are connected to the core network 300. The core network 300 is connected to the PDN 400. The base stations 101, 102 may be configured to manage a plurality of cells. In the present example, the base stations 101, 102 are 5G base stations and correspond to gNBs.

Further, the base stations 101, 102 may be referred to as a combination of a gNB Central Unit (CU) and a gNB Distributed Unit (DU) or any one of these. In the present embodiment, the base stations 101, 102 may be configured to be able to wirelessly communicate with other base stations. For example, in a case where the plurality of base stations 101, 102 is eNBs or a combination of an eNB and a gNB, the devices may be connected by an X2 interface. Further, in a case where the plurality of base stations 101, 102 is eNBs or a combination of an eNB and a gNB, the devices may be connected by an Xn interface. Moreover, in a case where the plurality of base stations 101, 102 is a combination of a gNB CU and a gNB DU, the devices may be connected by an F1 interface. All or at least a part of message/information described later may be communicated (e.g., via X2, Xn, F1 interface) between the plurality of base stations 101, 102.

Furthermore, the base stations 101, 102 may be configured by an assembly of a plurality of physical or logical devices. For example, in the present embodiment, each of the base stations 101, 102 may be distinguished into a plurality of devices of a Baseband Unit (BBU) and a Radio Unit (RU) and may be interpreted as an assembled body of the plurality of devices. Additionally or alternatively, in the embodiments of the present disclosure, the base stations 101, 102 may be either or both of a BBU and an RU. The BBU and the RU may be connected by a predetermined interface (e.g., eCPRI). Additionally or alternatively, the RU may be referred to as an RRU (Remote Radio Unit) or an RD (Radio DoT). Additionally or alternatively, the RU may correspond to a gNB DU described above or below. Additionally or alternatively, the BBU may correspond to a gNB CU described above or below. Additionally or alternatively, the RU may be a device integrally formed with an antenna. The antenna (e.g., the antenna integrally formed with the RU) on each of the base stations 101, 102 may adopt an Advanced Antenna System and support MIMO (e.g., Full Dimension MIMO (FD-MIMO) or beamforming. In the Advanced Antenna System, the antenna (e.g., the antenna integrally formed with the RU) on each of the base stations 101, 102 may include, for example, 64 antenna ports for transmission and 64 antenna ports for reception. In a case where the base stations 101, 102 support beamforming, the base stations 101, 102 transmit signals by, for example, causing beam sweeping of beams to in a circumferential direction or a radial direction of a cell. Note that the direction of the beam sweeping is not limited to the horizontal direction, and may be a vertical direction or any direction by a combination of the horizontal direction and the vertical direction. That is, in a case where the plurality of antenna elements of the antenna that performs beamforming is arranged in the horizontal direction and the vertical direction with respect to the antenna surface, the orientation of the beam can be controlled in the horizontal direction and the vertical direction by adjusting a setting regarding the antenna (e.g., an antenna tilt angle, a distance and wavelength between antenna elements (elements), a phase offset, and reference transmission power) to be described later.

The core network 300 is an NR core network (5G Core (5GC)), and may include an Access and Mobility Management Function (AMF), a Session Management Function (SMF), a User Plane Function (UPF), a Policy Control Function (PCF), and Unified Data Management (UDM).

The terminal 201 is a communication device that wirelessly communicates with other devices. The terminal 201 is, for example, a sensor or a camera device having a communication function, a mobile phone, a smart device (smartphone or tablet), a personal digital assistant (PDA), or a personal computer. The terminal 201 may be a head mounted display having a function of transmitting and receiving data wirelessly, VR goggles, or the like. The terminal 201 is a 5G terminal and corresponds to User Equipment (UE).

Note that in a case where the communication system of the present embodiment is an NR cellular communication system, the communication system may be applied not only to 5G NR Standalone but also to 3GPP 5G NR Non-Standalone.

A cell provided by each of the base stations 101, 102 is referred to as a serving cell. The serving cell includes a Primary Cell (PCell) and a Secondary Cell (SCell). In a case where a Dual Connectivity (e.g., EUTRA-EUTRA Dual Connectivity, EUTRA-NR Dual Connectivity (ENDC), EUTRA-NR Dual Connectivity with 5GC, NR-EUTRA Dual Connectivity (NEDC), NR-NR Dual Connectivity) is provided to the UE (e.g., terminal 201), the PCell and zero or one or more SCells provided by a Master Node (MN) are referred to as a Master Cell Group. Moreover, the serving cell may include a Primary Secondary Cell or Primary SCG Cell (PSCell). That is, in a case where the dual connectivity is provided to the UE, the PSCell and zero or one or more SCells(s) provided by a Secondary Node (SN) are referred to as a Secondary Cell Group (SCG). Unless a special setting is made (e.g., PUCCH on SCell), a physical uplink control channel (PUCCH) is transmitted in the PCell and the PSCell, but is not in the SCell. Also, a radio link failure is detected in the PCell and the PSCell, but is not detected in the SCell (may not be detected). As described above, the PCell and the PSCell have special roles among the serving cells and can thus be referred to also as Special Cells (SpCells). One downlink component carrier and one uplink component carrier may be associated with one cell. In addition, a system bandwidth corresponding to one cell may be divided into a plurality of Bandwidth Parts. In this case, one or more Bandwidth Parts may be set the UE, and one bandwidth part may be used for the UE as an Active BWP. Further, wireless resources (e.g., a frequency band, numerology (subcarrier spacing), and a slot format (slot configuration)) that can be used by a terminal device 10 may be different for each cell, each component carrier, or each BWP.

That is, each of the base stations 101, 102 in the first embodiment described above, a second embodiment, and modifications may be an MN or SN in the NR-NR DC as the 3GPP 5G NR standalone, or may be ENDC as the 3GPP 5G NR non-standalone, ENDC with 5GC, or a gNB (en-gNB) in the NEDC.

### <Configuration of Base Station>

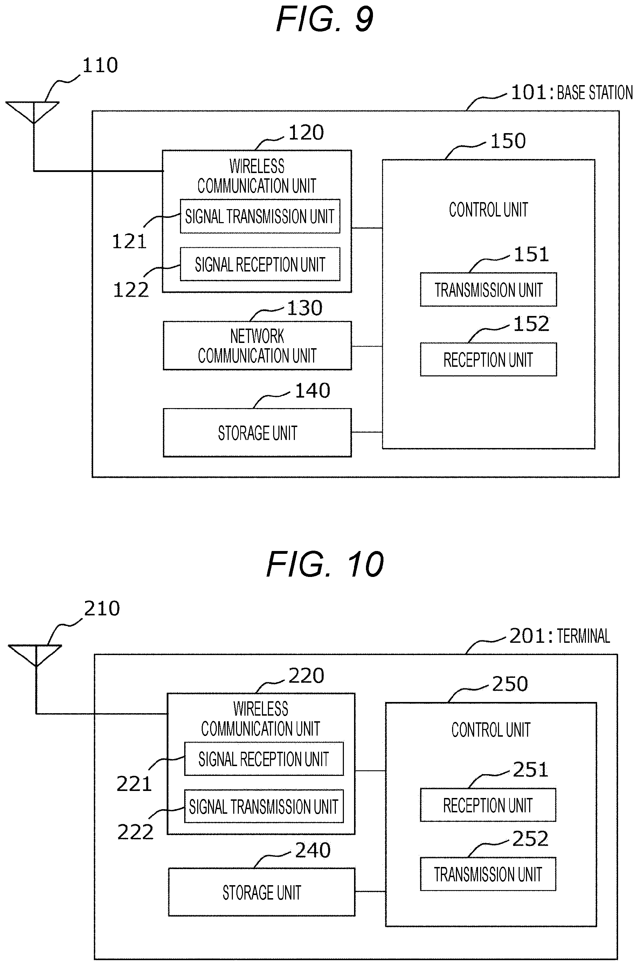

Fig. 9 is a block diagram illustrating an example of the base station 101 according to the embodiment of the present disclosure. The base station 101 includes an antenna 110, a wireless communication unit 120, a network communication unit 130, a storage unit 140, and a control unit 150. The base station 102 has a function of a normal gNB in 5G, and further has a function of performing an operation following an instruction of the base station 101 according to the present embodiment. The base station 102 may have a configuration similar to that of the base station 101. The wireless communication unit 120, the network communication unit 130, and the control unit 150 are implemented by, for example, a processor (hardware processor) such as a Central Processing Unit (CPU) or a Micro-Processing Unit (MPU), or an integrated circuit such as an Application-Specific Integrated Circuit (ASIC) or a Field-Programmable Gate Array (FPGA). The storage unit 140 is implemented by an arbitrary recording medium such as a memory, a hard disk device, an optical disk, or a magnetic recording device. The memory may be a volatile memory or a nonvolatile memory.

The antenna 110 radiates a signal output from the wireless communication unit 120 into space as a radio wave. Further, the antenna 110 converts a radio wave in space into a signal and outputs the signal to the wireless communication unit 120. The antenna 110 may have a plurality of antenna elements and form a beam.

The wireless communication unit 120 transmits and receives signals. The signal includes data or information. The wireless communication unit 120 includes a signal transmission unit 121 that transmits a signal and a signal reception unit 122 that receives a signal. For example, the signal transmission unit 121 transmits a downlink signal to the terminal 201, and the signal reception unit 122 receives an uplink signal from the terminal 201. The wireless communication unit 120 can form one or more beams (transmitted beams) using the antenna 110 and transmit a signal to the terminal 201 by beam transmission. The beam for transmission is formed on the basis of a filter for beam transmission, and the filter may also be referred to as a transmission spatial filter (TX spatial filter). The signal transmission by the signal transmission unit 121 includes both beam transmission and non-beam transmission (omni transmission).

The network communication unit 130 transmits and receives information. For example, the network communication unit 130 transmits information to other nodes and receives information from other nodes. The other nodes include, for example, at least one of the base station 102 or the core network node.

The storage unit 140 temporarily or permanently stores programs and data for the operation of the base station 101.

The control unit 150 includes a reception unit 152 and a transmission unit 151. The reception unit 152 receives a signal including data or information from the terminal 201 via the wireless communication unit 120 or the signal reception unit 122. The transmission unit 151 transmits a signal including data or information to the terminal 201 via the wireless communication unit 120 or the signal transmission unit 121.

The control unit 150 controls the operation of the entire base station 101 and provides various functions of the base station 101.

In order to determine a desired beam to be used with the terminal 201, the control unit 150 may cause the terminal to measure the received power of a plurality of candidate beams (candidate beams). For example, the control unit 150 transmits a reference signal for quality measurement through each of candidate beams using different resources (i.e., frequencies of resources are the same, and times are different) by beam sweeping described in Background Art, and causes the terminal 201 to measure the received power of the reference signal transmitted through each candidate beam. For example, the control unit 150 may receive information designating a candidate beam having the largest received power value as a desired beam from the terminal 201, and determine to use the desired beam for data transmission to the terminal 201. The control unit 150 may transmit a reference signal for quality measurement to the terminal using the desired beam and cause the terminal to measure Channel Sate Information (CSI). The control unit 150 may acquire Channel Sate Information (CSI) and determine parameters such as a modulation scheme and a coding scheme. Alternatively, the control unit 150 can cause the terminal to measure and feed back CSI for each of a plurality of beam candidates, and determine a desired beam to be used for transmission to the terminal 201 on the basis of the CSI of each beam candidate. The received power or the CSI of the reference signal is an example of information indicating the communication quality of the beam. Note that the method for determining the desired beam described in this paragraph is an example, and other methods are also possible.

In order to grasp the interference quantity with a certain specific beam (e.g., desired beam), the control unit 150 determines a plurality of resources (first resources) each for transmitting a reference signal for interference measurement (first reference signal) with the interference beam (first beam). The resource is a resource specified by frequency and time. The plurality of resources is, for example, the same in frequency and different from each other in time. The control unit 150 or the transmission unit 151 causes the received power of the reference signal transmitted using each of the plurality of determined resources (i.e., the received power of the interference beam) to be measured, and causes information specifying the resource, for which the received power value less than or equal to a threshold value has been measured, to be reported (fed back) to the base station 101. Therefore, the control unit 150 or the transmission unit 151 transmits, to the terminal 201, report setting information (setting information) specifying the plurality of resources for measurement, the threshold value to be a comparison target of the received power, and the like. However, the threshold value may be set in the terminal 201 in advance, and in this case, it is not necessary to specify the threshold value in the report setting information. An upper limit value (N) may be set for the number of resources for which the terminal 201 is caused to report. N is an integer of 1 or more. In this case, information specifying the upper limit value (N) may be included in the report setting information.

The information specifying the resource is, for example, the ID of the resource. Alternatively, the information specifying the resource may be the ID of the interference beam transmitted using the resource. In a case where the configuration of the reference signal for interference measurement is changed for each resource or for each interference beam, the information specifying the resource may be the ID of the reference signal. The ID of the resource, the ID of the interference beam, or the ID of the reference signal may be included in a channel in the same slot (or frame) as the reference signal, or may be included in the reference signal.

The base station that transmits the reference signal for interference measurement (first reference signal) may be the base station 101, the base station 102, or both of them. In a case where the reference signal for interference measurement is transmitted from the base station 102, the control unit 150 of the base station 101 may have a function of transmitting, to the base station 102, information specifying one or more resources for the base station 102 to transmit the reference signal for interference measurement and the configuration of the interference beam to be transmitted using each of the resources (i.e., a filter that generates the interference beam).

The threshold value may be designated by an absolute value of the power. Alternatively, the threshold value may be specified relatively by the following method. That is, a reference signal for quality measurement (second reference signal) is transmitted to the terminal through a certain beam (e.g., desired beam or a second beam). A value relatively determined relative to the received power value of the reference signal in the terminal is used as the threshold value. For example, a value lower than the received power value by a certain value (difference value ΔD) is set as the threshold value. Alternatively, a reference signal for quality measurement (second reference signal) is transmitted to the terminal through each of a plurality of beams (e.g., a plurality of candidate beams or a plurality of second beams). A value relatively determined with reference to the maximum value of the received power of the reference signal in the terminal is used as the threshold value. For example, a value lower than the maximum value by a certain value (difference value ΔD) is set as the threshold value. The control unit 150 may include, in the report setting information, information specifying the certain value (difference value ΔD) used in a case where the threshold value is relatively determined.

A method other than reporting a resource for which the received power is less than or equal to the threshold value as a resource to be reported to the terminal 201 is also possible. For example, the terminal 201 may be caused to report a resource for which the received power is relatively low. For example, a predetermined number of resources may be reported to the terminal 201 in ascending order of received power. In this case, the above number of resources (or interference beams) is specified in ascending order of received power on the basis of the received power values measured by the terminal 201. That is, a predetermined number of resources are specified in order from the lowest received power.

The control unit 150 may specify, to the terminal 201, a received beam (third beam) to be used by the terminal 201 to receive the interference beam. For example, the base station 101 transmits a reference signal (second reference signal) through a desired beam (second beam) using a certain resource (third resource). The base station 101 instructs the terminal 201 to use the same beam as the beam used by the terminal 201 to receive the reference signal, for receiving each interference beam (more precisely, receiving the reference signal transmitted through the interference beam). In this case, the base station may include the instruction in the report setting information. In this case, the terminal 201 receives each interference beam transmitted from at least one of the base station 101 or the base station 102 by using the received beam determined according to the instruction in the report setting information.

In addition, the control unit 150 may give an instruction, in the report setting information, that as a method for determining the received beam (third beam) to be used by the terminal 201 to receive the interference beam, the following method should be used to perform the determination. The base station 101 transmits reference signals (second reference signals) to the terminal 201 through a plurality of candidate beams (second beams) using different resources (third resources). The terminal 201 determines a received beam that receives each candidate beam, and receives each candidate beam with the determined received beam. The received beam used to receive the candidate beam with a received power value highest or larger than or equal to a predetermined value among the received power values of the candidate beams is determined as the received beam to receive each interference beam.

### (Modifications)

The embodiment of the present disclosure assumes a situation in which a beam group having low interference with a desired beam is detected in a case where transmission is performed from a base station to a terminal through the desired beam, or other situations. However, as long as directional transmission is performed from the base station to the terminal, the present disclosure can be extended to a case other than beam transmission. For example, the present disclosure can also be applied to a situation in which a base station includes a plurality of directivity variable antennas, and signals are simultaneously transmitted from the plurality of directivity variable antennas with different directivities at the same frequency. In this case, in the description of the present embodiment, it is sufficient if "beam" is read as "directional transmission" or the like, for example.

### <Configuration of terminal>

Fig. 10 is a block diagram illustrating an example of the terminal 201 according to the embodiment of the present disclosure. The terminal 201 includes an antenna 210, a wireless communication unit 220, a storage unit 240, and a control unit 250.

The antenna 210 radiates a signal output from the wireless communication unit 220 into space as a radio wave. Further, the antenna 210 converts a radio wave in space into a signal and outputs the signal to the wireless communication unit 220. The antenna 210 has a plurality of antenna elements and can form a beam (received beam or third beam). The wireless communication unit 220 and the control unit 150 are implemented by, for example, a processor (hardware processor) such as a Central Processing Unit (CPU) or a Micro-Processing Unit (MPU), or an integrated circuit such as an Application-Specific Integrated Circuit (ASIC) or a Field-Programmable Gate Array (FPGA). The storage unit 240 is implemented by an arbitrary recording medium such as a memory, a hard disk device, an optical disk, or a magnetic recording device. The memory may be a volatile memory or a nonvolatile memory.

The wireless communication unit 220 transmits and receives signals. The signal includes data or information. The wireless communication unit 220 includes a signal transmission unit 221 that transmits a signal and a signal reception unit 222 that receives a signal. For example, the signal reception unit 222 receives a downlink signal from a base station, and the signal transmission unit 221 transmits an uplink signal to the base station. The wireless communication unit 220 can form one or more beams (received beams or third beams) using the antenna 210 and receive a signal including data or information from the base station 101. The received beam is formed on the basis of a filter for beam reception, and the filter may also be referred to as a receiver spatial filter (RX spatial filter).

The storage unit 240 temporarily or permanently stores programs and various data for the operation of the terminal 201.

The control unit 250 controls the operation of the entire terminal 201 to provide various functions of the terminal 201.

The control unit 250 may receive a plurality of candidate beams transmitted from the base station 101 and measure received power. That is, the control unit 250 receives a reference signal for quality measurement from the base station 101 through each candidate beam by beam sweeping using a different resource, and measures a received power value of each reference signal (received power value of each candidate beam). For example, the control unit 250 determines a candidate beam having the largest received power value as a desired beam and transmits information indicating the determined desired beam to the base station 101. In a case where the control unit 250 receives the reference signal for quality measurement from the base station 101 through the desired beam, the control unit 250 measures Channel Sate Information (CSI) and transmits the measured CSI to the base station 101. Alternatively, the control unit 250 may measure CSI for each of a plurality of beam candidates in response to a request from the base station 102 and feed back the CSI. In this case, the desired beam to be used for transmission to the terminal 201 in the base station 101 may be determined on the basis of the CSI of each beam candidate. The received power or the CSI of the reference signal transmitted through the beam is an example of information indicating the communication quality of the beam. Note that the method for determining the desired beam described in this paragraph is an example, and other methods are also possible.

Further, the control unit 250 has a function of detecting an interference beam group having low interference with the desired beam. In a case where the control unit 250 receives the report setting information for interference measurement from the base station 101, the control unit 250 measures the received power of the interference beam according to the report setting information, and transmits, to the base station 101, report information including information specifying a resource used to transmit an interference beam with a received power value less than or equal to a threshold value. For example, a plurality of resources (first resources) used for transmitting interference beams is designated in the report setting information, and the control unit 250 receives reference signals (first reference signals) transmitted using these resources and measures received power. The control unit 250 detects a resource for which a received power value less than or equal to a threshold value has been measured, and reports (feeds back) information specifying the detected resource to the base station 101. The control unit 250 acquires the threshold value used for comparison with the received power value from the report setting information. Alternatively, the threshold value may be stored in advance in the storage unit 240, and the threshold value may be acquired from the storage unit 240. In a case where the upper limit value (N) is set to the number of resources to be reported in the report setting information, information specifying the number of resources less than or equal to the upper limit value (N) is reported to the base station 101. The control unit 250 acquires information specifying a resource, for example, from a channel in the same slot (or frame) as the reference signal, or by reading the information from the reference signal.

In a case where an instruction to calculate a threshold value of a relative value is included in the report setting information, the control unit 250 calculates the threshold value according to the instruction. The control unit 250 receives a reference signal for quality measurement (second reference signal) transmitted from the base station 101 through a beam (e.g., desired beam or a second beam). The control unit 250 sets a value relatively determined with reference to the received power value of the reference signal as the threshold value. For example, a value lower than the received power value by a certain value (difference value ΔD) is set as the threshold value. Alternatively, the control unit 250 receives a reference signal for quality measurement (second reference signal) transmitted from the base station 101 through each of a plurality of beams (e.g., a plurality of candidate beams or a plurality of second beams). The control unit 250 sets a value relatively determined with reference to the maximum value of the received power of the reference signal as the threshold value. For example, a value lower than the maximum value by a certain value (difference value ΔD) is set as the threshold value. Information specifying the certain value (difference value ΔD) may be included in the report setting information. Alternatively, the certain value (difference value ΔD) may be stored in the storage unit 240 in advance.

In a case where a method other than reporting a resource for which the received power is less than or equal to a threshold value as a resource to be reported to the base station 101 is specified in the report setting information, the control unit 250 specifies a resource by the method and reports the resource to the base station 101. For example, in a case where an instruction to report a resource for which the received power is relatively low is included in the report setting information, a predetermined number of resources are reported to the base station 101 in ascending order of received power. For example, the control unit 250 specifies resources (or interference beams) in ascending order of received power, and transmits report information including information specifying a predetermined number of resources in ascending order of received power to the base station 101.

The control unit 250 may be instructed, from the base station 101, on a received beam (third beam) used by the terminal 201 to receive the interference beam. For example, the terminal 201 receives a reference signal (second reference signal) transmitted through a desired beam (second beam) using a certain resource (third resource) of the base station 101. In order to receive a reference signal, the control unit 250 determines a received beam from a plurality of candidate beams for reception, and receives a reference signal (receives a desired beam) with the determined received beam. For example, the control unit 250 selects a received beam having the largest received power among the plurality of candidates. It is assumed that the report setting information gives an instruction that the same beam as the beam used by the terminal 201 to receive the reference signal should be used to receive each interference beam (more precisely, receive the reference signal transmitted through the interference beam). In this case, the control unit 250 determines the determined received beam as a beam for receiving an interference beam, and receives the interference beam with the received beam.

Further, in the report setting information, the control unit 250 may specify the following method as a method for determining the received beam (third beam) to be used by the terminal 201 to receive the interference beam, the following method should be used to perform the determination. The control unit 250 receives reference signals (second reference signals) transmitted from the base station 101 through a plurality of candidate beams (second beams) using different resources (third resources). The control unit 250 determines a received beam that receives each candidate beam, and receives each candidate beam with the determined received beam. The received beam used to receive the candidate beam with a received power value highest or larger than or equal to a predetermined value among the received power values of the candidate beams is determined as the received beam to receive each interference beam.

Hereinafter, the present embodiment will be described in more detail using specific examples.

### [Specific Example 1]

In Specific Example 1, the base station 101 sets a plurality of resources each for measuring received power of an interference beam (first beam) (resources for interference measurement or first resources), and causes the terminal 201 to report information specifying a resource for which the received power less than or equal to a threshold value based on an absolute value has been measured from among these resources. More details are as follows.

The base station 101 determines a plurality of resources for measuring interference with an interference beam for a certain beam (e.g., desired beam). The resource is a downlink frequency and time resource, for example, a Channel State Information-Reference Signal (CSI-RS) resource. The plurality of resources may be set individually. Alternatively, one or more resources may be set as a resource set forming a group.

The base station 101 measures the received power for the plurality of resources for interference measurement determined in this manner, and gives an instruction, in the report setting information, that the terminal 201 should report the information specifying the resource of the received power less than or equal to the threshold value. In the present example, an ID of a resource, specifically, a CSI-RS Resource Identification (CRI) is used as the information specifying the resource. The base station 101 transmits the report setting information to the terminal 201. The report setting information may be included in a Radio Resource Control (RRC) message (e.g., RRCSetup message, RRCReconfiguration message) and transmitted from the base station 101 to the terminal 201.

The received beam used by the terminal 201 to receive the interference beam is the same as the received beam used by the terminal 201 to receive the desired beam. The base station 101 may set, in the report setting information, information specifying the desired beam as the received beam used by the terminal 201 to receive the interference beam.

Further, in the present example, the threshold value is a threshold value designated by the absolute value described above. As an example of the absolute value, -120 dBm can be used. That is, in a case where the received power is 120 dBm or less, it can be said that the interference is sufficiently low. Usually, marginal received power is defined for the terminal. For example, in a case where the terminal is configured to be able to receive a signal even at a received power of -100 dBm and there is interference of -120 dBm, the SINR is 20 dB. In this case, the terminal can sufficiently decode the received signal. Therefore, regardless of the magnitude of the received power of the desired beam, it is possible to detect a beam with low interference for the desired beam only by comparing the received power value of the interference signal (interference beam) with the threshold value.

The upper limit value (N) described above may be set for the number of resources that the terminal is caused to report, and the upper limit value may be set in the report setting information. This simplifies the algorithm on the base station side in a case where the number of interference beams (or resources) with received power values below a threshold value is a very large number. In addition, by limiting the number of resources that the terminal is caused to report, a decrease in frequency utilization efficiency can be prevented.

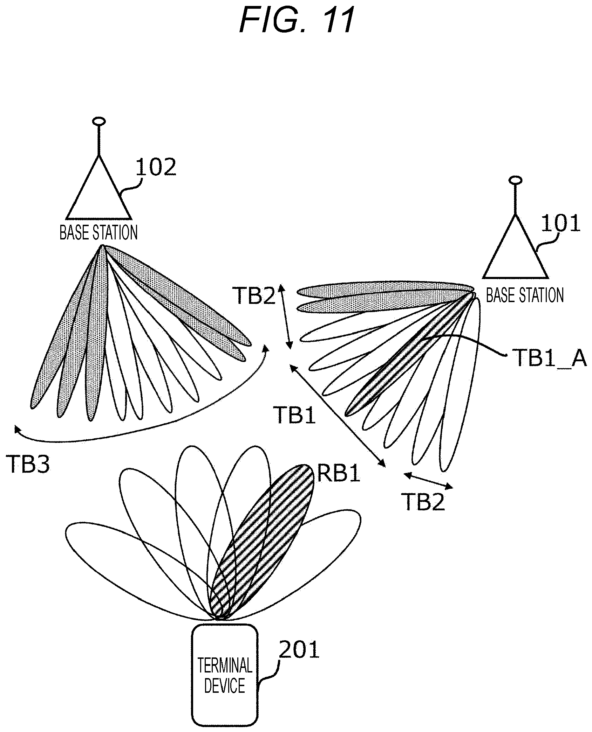

Fig. 11 is a diagram schematically illustrating an operation example of the base stations 101, 102 and the terminal 201 in Specific Example 1.

First, the base station 101 determines a desired beam for the terminal 201. Therefore, the base station 101 transmits reference signals through five beams TB1 by beam sweeping using different resources, and the terminal 201 receives the reference signals, transmitted through the respective beams TB1, using the corresponding received beams. Note that receiving a reference signal transmitted through a beam may be expressed as receiving a beam.

The received beam for receiving each beam TB1 may be determined by the terminal 201 or the base station 101 by an arbitrary method. In the present example, the terminal 201 selects a beam with the highest received power among a plurality of candidate received beams as the received beam for each beam B1. In the drawing, the plurality of beams output from the terminal 201 is the plurality of candidate received beams.

The terminal 201 transmits the ID of the resource used for the selected received beam to the base station 101, and the base station 101 determines the beam TB1 transmitted using the resource of the ID notification of which is provided from the terminal 201 as the desired beam. In the drawing, a determined desired beam TB1_A among the plurality of beams TB1 is indicated by hatching. Further, a received beam RB1 used by the terminal 201 to receive the desired beam is indicated by hatching.

Five beams (interference beams) TB2 for interference measurement are transmitted from the base station 101, and 10 interference beams TB3 are transmitted from the base station 102. The interference beams TB2, TB3 are transmitted using different resources. Beams other than the desired beam TB1_A among the plurality of beams TB1 may also be transmitted as interference beams. In the present example, a case where only the interference beams TB2, TB3 are transmitted as interference beams will be described. The terminal 201 receives these interference beams TB2, TB3 through the received beam RB1 for receiving the desired beam described above. A reference signal for interference measurement (first reference signal) is transmitted through each of the interference beams TB2, TB3. The reference signal transmitted through each interference beam (transmitted using each resource) may be a signal with the same configuration or a signal with a different configuration. Each reference signal may be distinguishable by a different ID.

The terminal 201 receives each of the interference beams TB2, TB3 through the above received beam RB1 and measures the received power. The terminal 201 detects an interference beam with a received power value less than or equal to a threshold value based on an absolute value as a low interference beam with the desired beam. In the example of Fig. 11, two interference beams TB2 indicated by dots and five interference beams TB3 indicated by dots are detected as low interference beams.

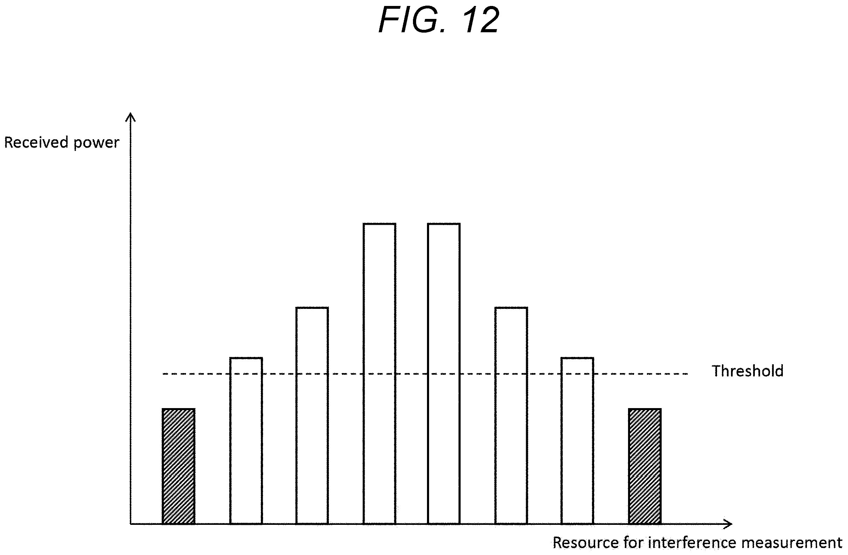

Fig. 12 schematically illustrates an example of detecting an interference beam with a received power value less than or equal to a threshold value (or detecting a resource used to transmit the interference beam). The horizontal axis indicates the resource for transmitting the interference beam, and the vertical axis indicates the received power value of the interference beam transmitted using the resource (more specifically, the received power value of the reference signal transmitted through the interference beam). In the example of Fig. 12, the interference beams transmitted using two resources indicated by hatching are detected as interference beams with received power values less than or equal to the threshold value.

An upper limit value N of the number of interference beams to be detected may be defined, and a maximum of N interference beams may be detected. For example, in a case where N = 8, a maximum of eight interference beams less than or equal to the threshold value are detected in ascending order of the received power. When the number of interference beams less than or equal to the threshold value is smaller than N, it is sufficient if all interference beams less than or equal to the threshold value are detected.

The terminal 201 uplink-transmits, to the base station 101, report information (report) including the ID of the resource used to transmit the detected interference beam and the received power value of the detected interference beam. The resource for transmitting the report from the terminal 201 may be specified in advance by the base station 101 to the terminal 201 in the report setting information, or an instruction on the resource for the report may be given to the terminal 201 by another method (e.g., Downlink Control Information (DCI), MAC Control Element). Additionally or alternatively, the base station 101 may specify the resource for transmitting the report from the terminal 201 in advance in the report setting information to the terminal 201, and specify the terminal 201 to trigger the report by another method (e.g., Downlink Control Information (DCI), MAC Control Element).

From the interference beams included in the report received from the terminal 201, the base station 101 can select a beam that can be transmitted to another terminal other than the terminal 201 simultaneously with the transmission of the desired beam TB1_A to the terminal 201 (a beam with little or no interference with the desired beam). The base station 101 may transmit, to the base station 102, the ID of the resource used to transmit the interference beam from the base station 102 among the IDs of the resources specified in the report. The base station 102 can select a beam to be transmitted to another terminal belonging to the cell of the base station 102 from among the interference beams transmitted using the resource identified by the ID, while the base station 101 causes the terminal 201 to have no (or low) interference with the desired beam TB1_A. In this manner, beam transmission to terminals other than the terminal 201 can be performed using the same resources (the same time and the same frequency) as the resources for transmitting the desired beam TB1_A to the terminal 201. This makes it possible to enhance the frequency utilization efficiency while suppressing interference with the terminal 201.

Hereinafter, Table 1 shows an example of information set from the base station 101 to the terminal 201.

**[Table 1]**

| Setting | Description |
|---|---|
| Resource for interference measurement | A plurality of resources each for measuring received power of an interference beam is set. One or more resource sets formed by bringing a plurality of resources together may be set. Each resource is assigned an ID, and using the ID, the terminal can notify the base station of a resource with less interference. |
| Received beam used by terminal to receive interference beam with respect to above plurality of resources for interference measurement | A received beam that was used when a beam (e.g., desired beam) transmitted using a resource designated by the base station was received is set as a received beam for interference measurement (i.e., the interference beam is received using a setting of Quasi Co-Located (QCL)). The base station designates the resource using the ID of the resource. When the QCL is not set, the terminal receives the interference beam through a received beam most likely to receive the interference beam (e.g., a received beam having the largest received power among a plurality of candidate received beams) . |
| Threshold value | An interference beam with received power less than or equal to this threshold value is specified as a low interference beam. That is, a resource used to transmit a beam with received power less than or equal to the threshold value is detected. |
| Number of beams (or resources) to be reported or upper limit value N thereof | The number of detected interference beams with received power less than or equal to the threshold value or an upper limit value N thereof is set. |
| Uplink resource for reporting | A resource for uplink to be used for the above report is set. |
| Content to be reported | Information identifying a resource used to transmit a detected beam and the received power value of the beam are reported. The information specifying the resource is, for example, the ID of the resource used to transmit the beam, for example, a CSI-RS Resource Identification (CRI). The received power is, for example, Reference Signal Received Power (RSRP) . |

A method for setting the information shown in Table 1 from the base station 101 to the terminal 201 will be specifically described.

For example, setting is performed separately for a report configuration and a resource configuration as described below. The terminal operates according to these settings.

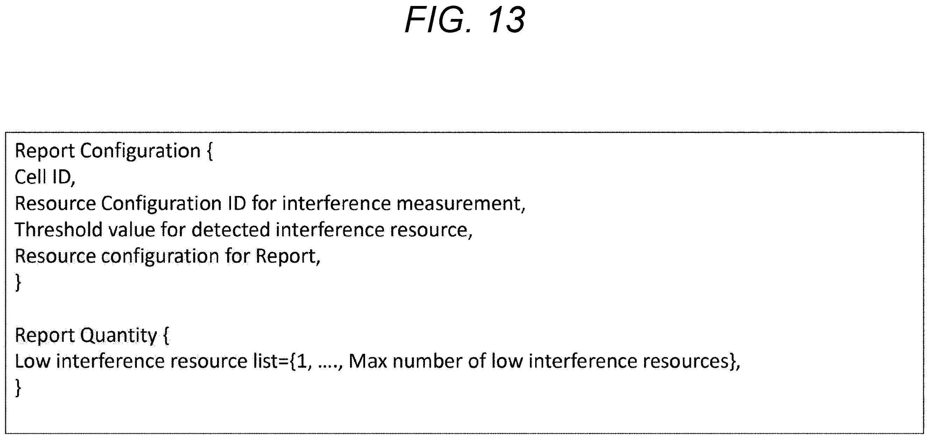

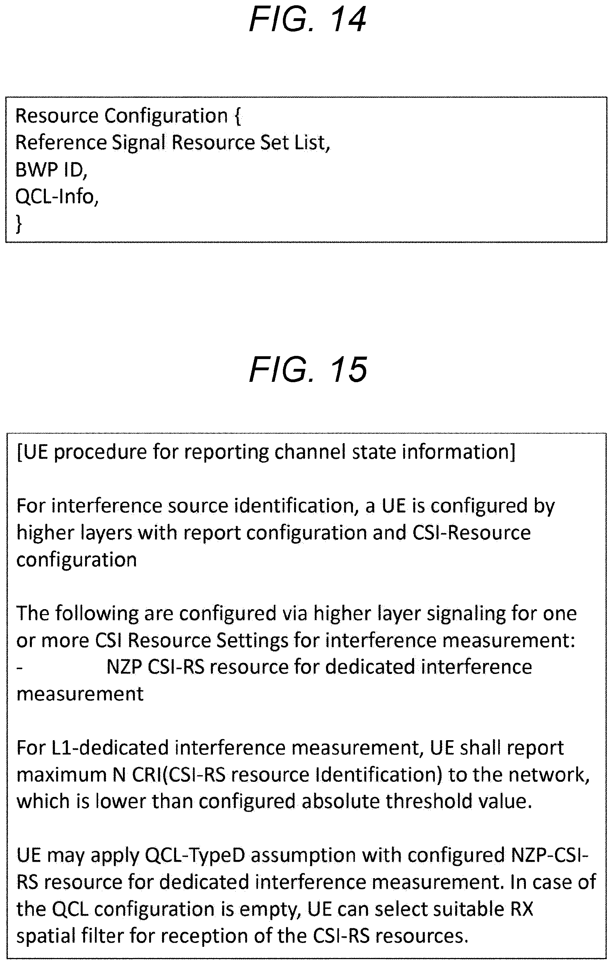

Fig. 13 illustrates a setting example of the report configuration. Fig. 14 illustrates a configuration example of the resource configuration.

In Fig. 13, the Cell ID indicates in which frequency band (component carrier) the resource to be measured exists.

The Resource Configuration ID for interference measurement specifies which resource is monitored to measure received power of the interference beam. The configuration of the resource to be monitored is specified by a separately defined resource configuration ID (cf. Fig. 14 to be described later). Note that a resource configuration for a resource is not required to monitor the desired beam. This is because, in the present embodiment, regardless of the received power value of the desired beam, the low interference beam is detected by comparing the received power value of the interference beam with a threshold value that is an absolute value.

The Threshold value for detected interference resource indicates, by an absolute value, a threshold value to be compared with the received power value of the interference beam.

The Resource configuration for Report specifies which uplink resource is used to perform reporting.

In the Report Quantity, the content to be reported to the base station is specified.

The Low interference resource list={1,...., Max number of low interference resources} reports a maximum number (an upper limit value) or less of resources used for transmitting low interference beams detected through comparison with the threshold value. The resource is specified by, for example, the ID (e.g., CRI or the like) of the resource.

Note that although an example of setting the resource configuration for interference measurement is illustrated here, the same format can be used for the resource configuration for channel measurement. The format illustrated in Fig. 14 is disclosed in 3GPP Rel16 TS38.331 Section 6.3.2.

The Reference Signal Resource Set List includes a plurality of Reference Signal Resource Sets (RS Resource Sets) including a plurality of Downlink Reference Signals (DL RSs) .

The BWP ID indicates which BWP among a plurality of partial frequency bands (BWP) obtained by dividing a frequency band (Component Carrier).

The QCL-Info indicates that the received beam (cf. the received beam RB1 in Fig. 11) of the terminal that was used when the desired beam was received is used to measure the interference beam. In a case where the QCL is not set, a received beam for receiving an interference beam can be optionally set on the terminal side.

Fig. 15 illustrates an example of a specification of an operation method for a terminal in Specific Example 1. In Fig. 15, the following content is described.

### [Procedure of terminal (UE) for reporting channel state information]

For identification of an interference source, the terminal is set by an upper layer with a report configuration and a CSI-resource configuration.

The following resources are set via upper-layer signaling for one or more CSI resource settings for interference measurement:
Non-Zero Power (NZP) CSI-RS resource for dedicated interference measurement
For Layer 1 (L1)-dedicated interference measurement, the terminal needs to report, to the network, a maximum of N CSI-RS resource Identifications (CRIs) less than a threshold value defined by an absolute value.

The terminal may apply the QCL-TypeD assumption by using the set NZP-CSI-RS resource for dedicated interference measurement. In a case where no QCL setting exists, the terminal may optionally select a receiver spatial filter (RX spatial filter) for receiving the CSI-RS resource.

### [Specific Example 2]

In Specific Example 2, a plurality of resources for determining a desired beam (a resource for channel measurement or a third resource) and a plurality of resources for measuring an interference beam (a resource for interference measurement or a first resource) are set. A relative threshold value is set with reference to the received power of the resource using the determined desired beam, and information (e.g., the ID of the resource) for specifying the resource used to measure the received power less than or equal to the threshold value among the resources for interference measurement is reported to the base station.

In Specific Example 1 described above, the threshold value has been set by an absolute value. In this method, in a case where the received power of the desired beam is sufficiently large, there is no problem even in a case where the received power of the interference beam is large. For example, in a case where the received power of the desired beam is -50 dBm, and the received power of the interference beam is -70 dB, the SINR of 20 dB can be ensured. Similarly, in a case where the received power of the desired beam is -80 dBm, and the received power of the interference beam is -100 dBm, an SINR of 20 dB can be ensured. That is, whether or not the interference beam causes significant interference to the desired beam is dominant not in the received power of the interference beam but in a difference from power received through the desired beam.

The method of Specific Example 1 is also effective in a case where the base station grasps the received power when the terminal received the desired beam and can set the threshold value in consideration of the received power of the desired beam. However, complicated processing is required in which the base station grasps the received power of the desired beam and sets the threshold value in consideration of the received power.

In Specific Example 2, a plurality of resources for determining a desired beam is set, and candidate beams for determining the desired beam are transmitted using the plurality of resources. A power value lower by a certain value ΔD from the received power in the resource for which the received power is highest on the terminal side is determined as a threshold value (threshold value as a relative value). It is thereby possible to determine the threshold value without complicating the processing of the base station. Note that the candidate beam transmitted using the highest resource may be used as the desired beam.

Hereinafter, Table 2 shows an example of information set from the base station 101 to the terminal 201. In Specific Example 2, the candidate beams are transmitted using the plurality of resources for determining the desired beam, and the candidate beam (or resource) with the highest received power is specified. Thus, unlike Specific Example 1, the plurality of resources for determining the desired beam is also set.

**[Table 2]**

| Setting | Description |
|---|---|
| Resource for interference measurement and resource for desired beam determination (for channel measurement) | • A plurality of resources each for measuring received power of an interference beam is set. One or more resource sets formed by bringing a plurality of resources together may be set. Each resource is assigned an ID, and using the ID, the terminal can notify the base station of a resource with less interference. • To determine a desired beam, a plurality of resources for each measuring received power of a beam that is a candidate for the desired beam is set. One or more resource sets formed by bringing a plurality of resources together may be set. Each resource is assigned an ID, and using the ID, the terminal can notify the base station of a resource with less interference. |
| Difference ΔD between received power of desired beam and threshold value | How low a value from the received power of the desired beam is determined as a threshold value is set on the basis of the difference ΔD. For example, when the difference ΔD is 20 dB, a value lower than the received power by 20 dB is set as the threshold value. Thereby, an interference beam lower than the received power by 20 DB or more is detected. An ID (e.g., CSI-RS Resource Identification (CRI)) identifying a resource for the detected interference beam is reported from the terminal to the base station. |
| Number of beams (or resources) to be reported or upper limit value N thereof | The number of selected interference beams with received power less than or equal to the threshold value or an upper limit value N thereof is set. |
| Uplink resource for reporting | A resource for uplink to be used for reporting is set. |
| Content to be reported | Information identifying a beam with small interference is reported. For example, an ID (for example, CRI) of a resource corresponding to the beam is reported. A maximum of N CRIs are reported. |

ΔD may be a fixed value (e.g., 20 dB or the like). In this case, the process of setting ΔD in the report setting information (report configuration) transmitted from the base station to the terminal may be omitted.

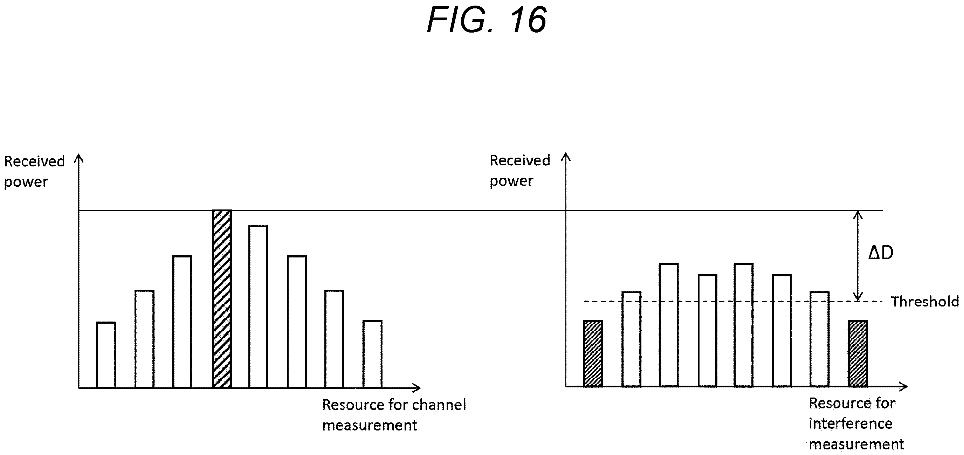

Fig. 16 schematically illustrates an example of detecting an interference beam with a received power value less than or equal to a threshold value that is lower than the received power value of the desired beam by a certain value ΔD.

In the left diagram of Fig. 16, the horizontal axis represents the resource for transmitting the beam (candidate beam) for channel measurement, and the vertical axis represents the received power value of the candidate beam transmitted using the resource (more specifically, the received power value of the reference signal transmitted through the candidate beam). A power value lower by ΔD than the received power in the resource (the resource indicated by hatching) used for transmitting the candidate beam with the highest received power is set as the threshold value.

In the right diagram of Fig. 16, the horizontal axis represents the resource for transmitting the beam for interference measurement (interference beam), and the vertical axis represents the received power value of the interference beam transmitted using the resource (more specifically, the received power value of the reference signal transmitted through the interference beam). The interference beams transmitted using two resources indicated by hatching are detected as interference beams with received power values less than or equal to the threshold value.

A method for setting the information shown in Table 2 from the base station 101 to the terminal 201 will be specifically described.

For example, setting is performed separately for a report configuration and a resource configuration as described below. The terminal needs to operate according to these settings.

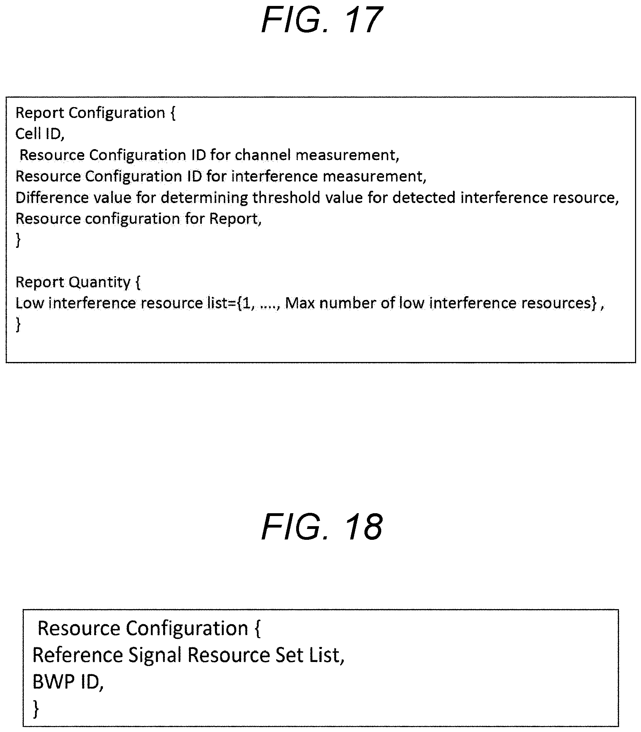

Fig. 17 illustrates a setting example of the report configuration. Only a difference from the report configuration of Fig. 13 illustrated in Specific Example 1 will be described.

The Resource Configuration ID for channel measurement specifies which resource is monitored to measure received power of the interference beam. The configuration of the resource is specified by a separately defined resource configuration ID. Although the resource for channel measurement and the resource for interference measurement are separate resources, the format of the resource configuration may be common between the Resource Configuration ID for channel measurement and the Resource Configuration ID for interference measurement.

The Difference value for determining threshold value for detected interference resource indicates that a value smaller than the received power value of the desired beam by ΔD (Difference value) is used as the threshold value. That is, the threshold value in Specific Example 2 is a relative value based on the received power of the desired beam.

Fig. 18 illustrates a setting example of the resource configuration. As described above, the format of the resource configuration may be common between the Resource Configuration ID for channel measurement and the Resource Configuration ID for interference measurement. The resource configuration in Fig. 18 corresponds to a configuration with the QCL-Info removed from the resource configuration in Fig. 14 illustrated in Specific Example 1. Therefore, a detailed description of Fig. 18 is omitted.

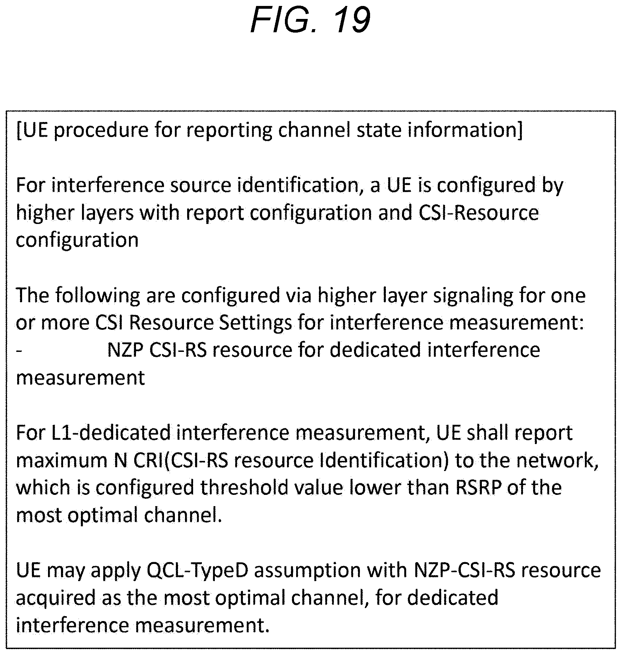

Fig. 19 illustrates an example of a specification of an operation method for a terminal in Specific Example 2. In Fig. 19, the following content is described.

### [Procedure of terminal (UE) for reporting channel state information]

For identification of an interference source, the terminal is set by an upper layer with a report configuration and a CSI-resource configuration.

The following resources are set (e.g., by including the Information Element indicating the following resources in the RRC message and transmitting the RRC message) via upper-layer signaling for one or more CSI resource settings for interference measurement:
Non-Zero Power (NZP) CSI-RS resource for dedicated interference measurement
For L1 (Layer 1) - For dedicated interference measurement, the terminal needs to report, to the network, a maximum of N of CSI-RS resource Identifications (CRIs) less than a threshold value that is lower than the received power (RSRP) of the optimal channel.

The terminal may apply the QCL-TypeD assumption by using the NZP-CSI-RS resource acquired as the optimal channel, for dedicated interference measurement.

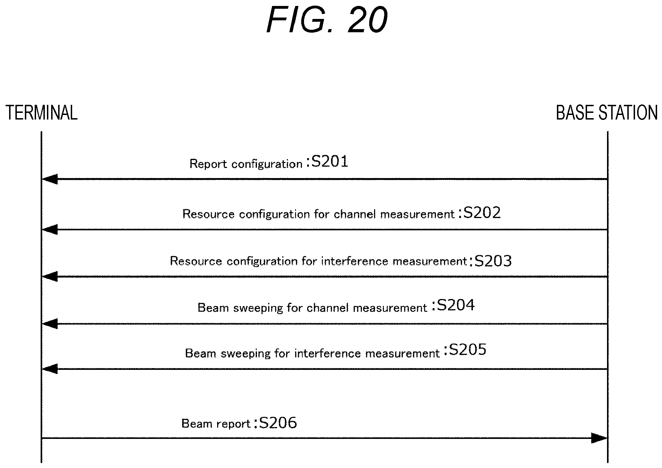

Fig. 20 is a sequence diagram illustrating an example of a procedure performed between the base station 101 and the terminal 201 in Specific Example 2.

In Fig. 20, the base station 101 transmits the report configuration to the terminal 201 (S201). The base station 101 further transmits, to the terminal 201, a resource configuration defining a resource for determining the desired beam (a resource for channel measurement) and a resource configuration defining a resource for interference measurement (S202, S203). The report configuration and the resource configuration correspond to the report setting information according to the present disclosure.

The base station 101 sequentially transmits a reference signal (second reference signal) through a candidate beam (third beam) as a candidate of the desired beam using a plurality of resources (third resources) for channel measurement by beam sweeping (S204). The terminal 201 calculates the threshold value by subtracting the certain value ΔD from the received power of the beam (desired beam) with the highest received power among the candidate beams.

The base station 101 sequentially transmits a plurality of interference beams using a plurality of resources for interference measurement by beam sweeping (S205). The terminal 201 compares the received power value of each interference beam with a threshold value, and detects an interference beam with received power less than or equal to the threshold value. The terminal 201 reports information specifying the detected interference beam to the base station 101 (S206). The information identifying the detected interference beam is, for example, the ID of the resource used to transmit the detected interference beam. In addition, the information identifying the detected interference beam may be the ID of the interference beam or the ID of the reference signal transmitted through the interference beam.

### (Effects of First Embodiment)

According to the first embodiment, the base station can efficiently acquire a beam having a small interference quantity in the terminal with respect to the beam to be provided to the terminal. Conventionally, there has been prepared a mechanism in which a terminal measures an interference quantity (SINR), obtained when the terminal receives another beam designated by a base station while receiving the desired beam, and the terminal reports the SINR. However, to reduce interference between beams between a plurality of base stations or between a plurality of beams transmitted by the same base station, it is more useful to grasp information as to which beam does not cause interference during the use of the desired beam. However, there is no conventional method for acquiring such information. In the present embodiment, a beam group in which interference is not a problem can be efficiently detected by the method described above, so that it is possible to simultaneously transmit data to another terminal by using beams that do not interfere with each other or have less interference with beams provided to the terminal. This makes it possible to improve downlink throughput.

### (Second Embodiment)

In the first embodiment described above, in a case where the terminal is receiving data, transmitted by the base station through a desired beam, by using a received beam, it is possible to efficiently detect a beam group having less interference with the terminal. However, the desired beam of the terminal may be changed due to a change in the situation of the terminal, such as a case where the terminal moves or a case where a radio wave condition changes. Every time the desired beam is changed, performing a procedure of detecting a low interference beam according to the changed desired beam leads to an increase in the amount of resources used for the procedure and increases processing overheads. The present embodiment achieves efficient detection of a low interference beam even when the desired beam of the terminal is changed.

In a case where the desired beam received by the terminal is changed to another desired beam, the received beam used by the terminal may be the same as the case where the received beam is changed. In a case where there is no change in the received beam of the terminal, the low interference beam with respect to the received beam is also not changed. On the other hand, in a case where the desired beam is changed and the received beam is also changed, the direction of the received beam of the terminal is changed, so that the low interference beam is also changed. That is, what is important in detecting the low interference beam is the received beam used on the terminal side.

In the present embodiment, the control unit 150 of the base station grasps the correspondence relationship between the beam range (from which beam to which beam) and the received beam (third beam) of the terminal for a plurality of beams (second beams) that may be used as desired beams with the terminal. The control unit 250 on the terminal side transmits report information (second report information) including information of the received beam (third beam) used for reception for each beam (second beam) to the base station, and transmits report information (first report information) including information on the low interference beam specified for each received beam to the base station. The control unit 150 of the base station 101 receives the first report information and the second report information, specifies the range of beams using the same received beam, and stores correspondence information in which the range of beams and the information of the low interference beam are associated with each other in the storage unit 140. The control unit 150 of the base station 101 can efficiently detect the low interference beam for each desired beam used with the terminal by using the correspondence information stored in the storage unit 140.

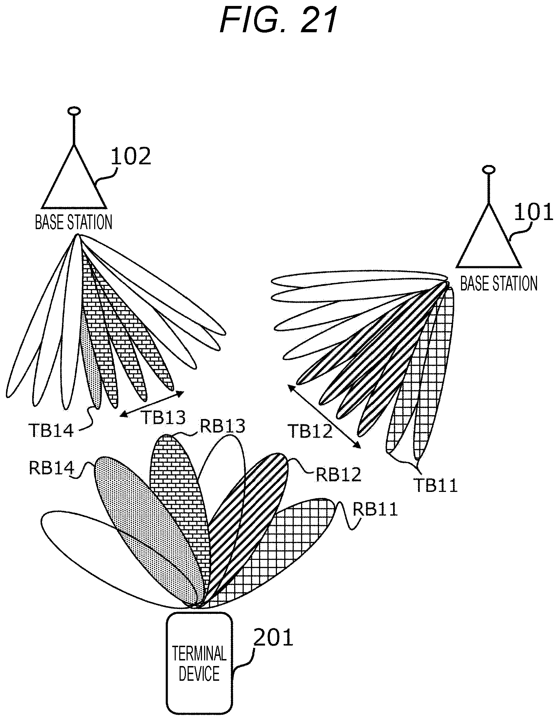

Fig. 21 is a diagram schematically illustrating a correspondence relationship between a beam that may be selected as a desired beam by the base station 101 or the base station 102 in the second embodiment and a received beam used by the terminal to receive the beam.

When the base station 101 uses one of two beams TB 11 as the desired beam, the terminal 201 uses a received beam RB 11. When the base station 101 uses any one of four beams TB 12 as the desired beam, the terminal 201 uses a received beam RB 12. When the base station 102 uses any one of three beams TB 13 as the desired beam, the terminal 201 uses the received beam RB 13. When the base station 102 uses a beam TB 14 as the desired beam, the terminal 201 uses the received beam RB 14. That is, the two beams TB 11 correspond to the received beam RB 11, the four beams TB 12 correspond to the received beam RB 12, the three beams TB 13 correspond to the received beam RB 13, and one beam TB 14 corresponds to the received beam RB 14.

The terminal 201 reports correspondence information indicating which received beam is used for the beam transmitted from each of the base stations 101, 102 to the base station 101. Table 3 below shows an example of the correspondence information reported to the base station 101.

**[Table 3]**

| ID (CRI: CSI-RS Resource Identification)) of resource corresponding to beam from base station | ID (RBI: Received Beam Identification) of received beam used by terminal to receive beam |
|---|---|
| 1 | 1 |
| 2 | 1 |
| 3 | 1 |
| 4 | 2 |
| 5 | 2 |
| 6 | 2 |
| 7 | 2 |

The received beam ID (RBI) is an ID with which a received beam can be identified on the terminal 201 side. It is not necessary for the base station 101 to know which received beam ID actually indicates which received beam physically. What needs to be known on the base station 101 side is the relationship between the received beam used by the terminal 201 and the range of the beam on the base station side where the received beam is used.

In the example of Table 3, the received beam with received beam ID = 1 is used for reception of beams CRIs = 3 to 7 from the base station. The received beam with received beam ID = 2 is used for reception of beams CRI = 1 to 3 from the base station. Therefore, for example, the base station can learn that when the terminal receives beams of CRI = 2 and CRI = 6, the terminal uses different received beams for received beams of CRI = 2 and CRI = 6, respectively. Further, the base station can learn that when the terminal receives beams of CRI = 1 and CRI = 2, the terminal receives beams of CRI = 1 and CRI = 2 by using the same received beam.

The following shows an example of setting various types of information for performing the present embodiment from the base station 101 to the terminal 201.

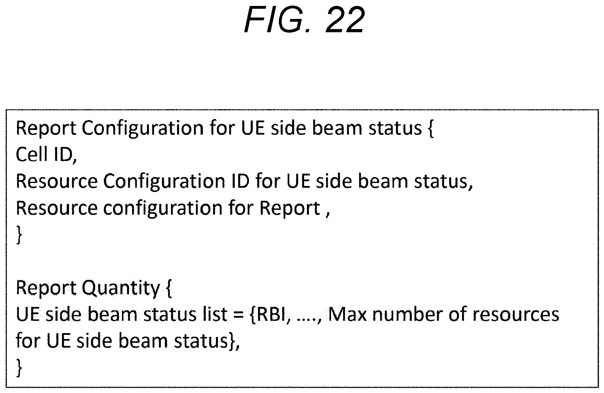

Fig. 22 illustrates a setting example of the report configuration for the terminal-side beam status (the report configuration for UE side beam status) according to the second embodiment.

The Cell ID and the Resource configuration for Report are the same as those in the first embodiment.

The Resource Configuration ID for UE side beam status specifies which resource to monitor to investigate a received beam corresponding to each beam. The configuration of the resource is specified by an ID of a separately defined resource configuration. A format of the Resource Configuration for UE side beam status is the same as that of a normal resource configuration (cf. Fig. 18) .

The UE side beam status list is a list of received beam IDs (RBIs) indicating which received beam has been used by the terminal side for the above resources prepared for examining the received beams used on the terminal side.

The terminal 201 needs to perform reporting to the base station according to the setting of the report configuration for UE side beam status in Fig. 22.

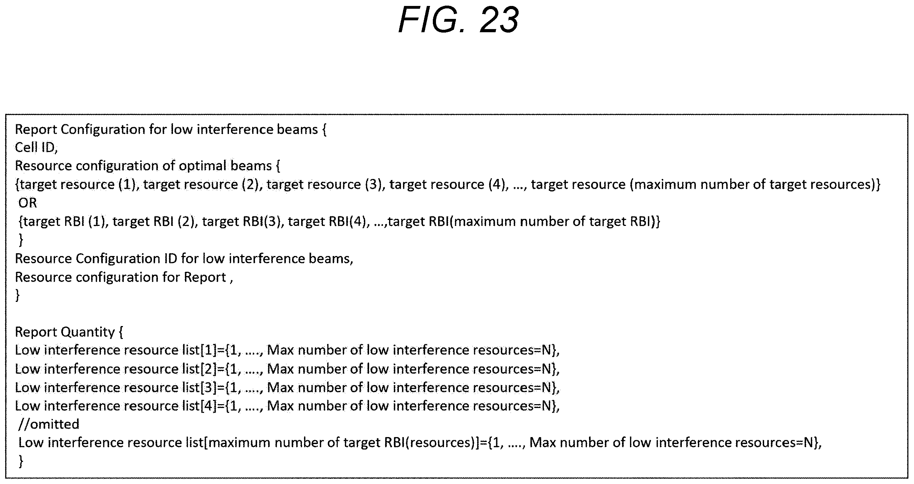

Fig. 23 illustrates a setting example of the resource configuration for the low interference beams (resource configuration for low interference beams) according to the second embodiment.

The Cell ID is the same as that in the first embodiment.

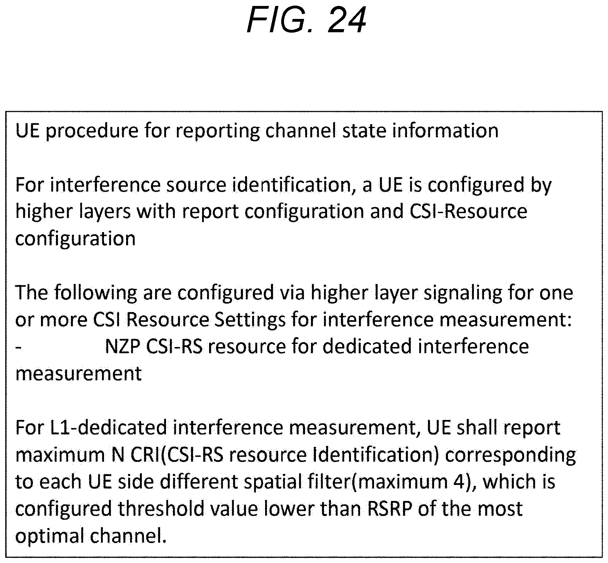

The Resource configuration of optimal beams specifies one resource for which a different received beam has been designated from among resources used in the Report Configuration for UE side beam status as a representative resource. That is, the received beam to be investigated for the interference beam is designated by the ID of the resource for which each received beam has been used. The description example in this case corresponds to {target resource (1), target resource (2), target resource (3), target resource (4),..., target resource (maximum number of target resources)} in Fig. 24.

Alternatively, it is also possible to directly specify the ID (RBI) of the received beam instead of the resource ID. The description example in this case corresponds to {target RBI (1), target RBI (2), target RBI (3), target RBI (4),..., target RBI (maximum number of target RBI)} in Fig. 24.

The Resource Configuration ID for low interference beams specifies which resources to monitor to identify interference beams. The configuration of the resource is specified by a separately defined resource configuration ID. A format of the Resource configuration for low interference beams is the same as that of a normal resource configuration (cf. Fig. 18).

The Resource configuration for Report is the same as that in the first embodiment.

The Low interference resource list [X] = {1,...., Max number of low interference resources = N} is a list of resources corresponding to the detected low interference beams for the received beam corresponding to the target resource (X) or target RBI (X). The number of elements in the list is N at most. X is an integer of 1 or more and Y or less, and Y corresponds to the number of received beams.

The terminal 201 needs to perform reporting to the base station 101 according to the setting of the Report configuration for low interference beams in Fig. 23.

With the settings of Figs. 22 and 23, the terminal 201 reports the plurality of low interference beams corresponding to the plurality of received beams to the base station, so that even when the desired beam of the terminal 201 is changed, a low interference beam according to the changed desired beam can be detected efficiently.

Fig. 24 illustrates an example of a specification of an operation method for the terminal according to the present embodiment. In Fig. 24, the following content is described. Note that in the following definition example, a case where the number of received beams (spatial filters) of the terminal is four at the maximum is described, but the maximum value of the number of received beams is not limited to four.

### [Procedure of terminal (UE) for reporting channel state information]

For identification of an interference source, the terminal is set by an upper layer with a report configuration and a CSI-resource configuration.

The following is set via upper-layer signaling for one or more CSI resource settings for interference measurement:
Non-Zero Power (NZP) CSI-RS resource for dedicated interference measurement
For L1 (Layer 1) - For dedicated interference measurement, the terminal needs to report CRI (CSI-RS resource Identification) lower than the received power (RSRP) of the optimal channel and smaller than a set threshold value, corresponding to a maximum of N (a maximum of 4) different spatial filters on each terminal side.

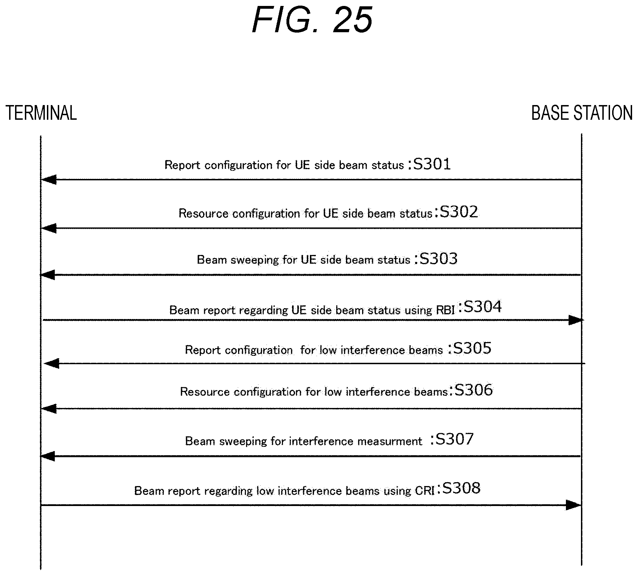

Fig. 25 is a sequence diagram illustrating an example of a procedure performed between the base station 101 and the terminal 201 according to the present embodiment.

A resource (third resource) for receiving each of a plurality of beams that may be selected as a desired beam is set from the base station 101 to the terminal 201 by the Report configuration for UE side beam status and the Resource configuration for UE side beam status in Fig. 22 (S301, S302). The resource to be set can be distinguished by, for example, a resource ID (CRI) or an ID of a beam transmitted using the resource.

The base station 101 transmits reference signals (second reference signals) through beams (third beams) using a plurality of resources (third resources) by beam sweeping (S307). The terminal 201 monitors the set resources, selects a received beam for reception for each resource, and reports which received beam (third beam) has been used to receive each beam to the base station by a received beam ID (RBI) (S304). The base station 101 determines one resource among one or more resources (third resources) used for receiving the interference beam as the representative resource for each received beam.

The base station 101 instructs the terminal 201 to receive the interference beam using the received beam that was used when the beam was received by each representative resource (S305, S306). The received beam is designated by the resource ID of the representative resource or the received beam ID. The resource ID and the received beam ID of the representative resource are an example of information specifying the received beam.

The settings in steps S305 and S306 are performed by the Report Configuration for low interference beams and the Resource Configuration for low interference beams in Fig. 23. The Report Configuration for low interference beams and the Resource Configuration for low interference beams correspond to an example of report setting information according to the present disclosure.

The base station 101 transmits interference beams (first beams) using a plurality of resources (first resources) by beam sweeping (S307). The terminal 201 receives an interference beam, more specifically, a reference signal (first reference signal) transmitted through the interference beam by using the received beam (third beam) set above. The terminal 201 reports, to the base station, the ID of the beam (or the ID of the resource used to transmit the beam) with received power less than or equal to the threshold value as the ID of the low interference beam (S308).

### (Effects of Second Embodiment)

According to the present embodiment, a base station acquires correspondence information between a range of beams and received beams, and further detects one or more beams with low interference for each of a plurality of received beams in a terminal. Even when the desired beam to be used for transmission to the terminal is changed, the base station can specify the received beam corresponding to the desired beam on the basis of the correspondence information between the range of the beam and the received beam, and can efficiently detect the low interference beam for the terminal.

Note that the above effects are not necessarily limited, and any of the effects described in the present description or other effects that can be obtained from the present description may be exhibited in addition to or in place of the above effects.

Note that the embodiments described above illustrate examples for embodying the present disclosure, and the present disclosure can be implemented in various other forms. For example, various modifications, substitutions, omissions, or combinations thereof can be made without departing from the gist of the present disclosure. Such modifications, substitutions, omissions, and the like are also included in the scope of the present disclosure and are similarly included in the invention described in the claims and the equivalent scopes thereof.

Further, the effects of the present disclosure described in the present description are merely exemplifications, and other effects may be provided.

Note that the present disclosure can also have the following configurations.

### [Item 1]

A base station including:
a transmission unit configured to transmit setting information that gives an instruction on measurement of received power of a first reference signal for interference measurement transmitted using each of a plurality of first resources; and
a reception unit configured to receive first report information that includes information specifying, among the plurality of first resources, a second resource for which the received power is lower than or equal to a threshold value or is relatively low.

### [Item 2]

The base station according to item 1, in which
the setting information includes the threshold value and includes information giving an instruction on use of the threshold value.

### [Item 3]

The base station according to item 1 or 2, in which
the transmission unit transmits a second reference signal for quality measurement using a third resource different from the plurality of first resources, and
the threshold value is a value relatively defined with reference to a received power value of the second reference signal.

### [Item 4]

The base station according to item 3, in which
the threshold value is a value lower than the received power value of the second reference signal by a certain value.

### [Item 5]

The base station according to any one of items 1 to 4, in which
the setting information includes information giving an instruction on setting of the number of the second resources, specified by the first report information, to less than or equal to an upper limit value, and
the number of the second resources specified by the first report information is less than or equal to the upper limit value.

### [Item 6]

The base station according to any one of items 1 to 5, in which
a plurality of the first reference signals transmitted using the plurality of first resources is transmitted through a plurality of different first beams.

### [Item 7]

The base station according to item 6, in which
the transmission unit transmits a second reference signal for quality measurement through a second beam using a third resource, and the setting information includes information giving an instruction on use of a third beam to receive the first reference signal transmitted through each of the first beams, the third beam having been used to receive the second reference signal transmitted through the second beam.

### [Item 8]

The base station according to item 6 or 7, in which
the transmission unit transmits second reference signals for quality measurement through a plurality of different second beams using a plurality of third resources, and
the setting information includes information giving an instruction on reception of the first reference signal transmitted through each of the plurality of the first beams by using a beam with received power of corresponding one of the second reference signals maximum or larger than or equal to a predetermined value among a plurality of third beams used to receive the second reference signals transmitted through the plurality of second beams.

### [Item 9]

The base station according to item 8, in which
the threshold value is a value lower than the received power of a beam with the received power maximum or larger than or equal to a predetermined value by a certain value.

### [Item 10]

The base station according to any one of items 1 to 9, in which
the first report information includes an identification (ID) of the second resource as information specifying the second resource.

### [Item 11]

The base station according to any one of items 6 to 10, in which
the first report information includes an ID of a first beam used for the second resource as information specifying the second resource.

### [Item 12]

The base station according to any one of items 6 to 11, in which
the transmission unit transmits second reference signals for quality measurement through a plurality of second beams using a plurality of third resources,
the reception unit receives, for each of the second beams, second report information including information specifying a third beam used to receive corresponding one of the second reference signals,
the setting information gives an instruction on use of the third beam to receive the first reference signal that is transmitted through the first beam, and
the first report information includes information specifying the second resource for each of the third beams.

### [Item 13]

The base station according to item 12, in which
the information specifying the third beam includes an ID of the third beam.

### [Item 14]

The base station according to item 12 or 13, in which
the information specifying the second resource includes an ID of the second resource.

### [Item 15]

The base station according to item 13 or 14, in which
the information specifying the second resource includes an ID of the first beam used for the second resource.

### [Item 16]

The base station according to any one of items 1 to 15, in which
the first reference signal is a signal transmitted by the base station or another base station different from the base station.

### [Item 17]

The base station according to any one of items 1 to 16, in which
the transmission unit transmits the setting information to a communication device, and
the reception unit receives the first report information from the communication device.

### [Item 18]

A communication method, including:
transmitting setting information that gives an instruction on measurement of received power of a first reference signal for interference measurement transmitted using each of a plurality of first resources; and
receiving first report information that includes information specifying, among the plurality of first resources, a second resource for which the received power is lower than or equal to a threshold value or is relatively low.

### [Item 19]

A communication device including:
a reception unit configured to receive setting information that gives an instruction on measurement of received power of a first reference signal for interference measurement transmitted using each of a plurality of first resources;
a control unit configured to measure received power of the first reference signal transmitted using the first resource; and
a transmission unit configured to detect a second resource for which the received power is less than or equal to a threshold value or is relatively low among the plurality of first resources, the transmission unit being configured to transmit first report information that includes information specifying the second resource.

### [Item 20]

A communication method, including:
receiving setting information that gives an instruction on measurement of received power of a first reference signal for interference measurement transmitted using each of a plurality of first resources;
measuring received power of the first reference signal transmitted using the first resource; and
detecting a second resource for which the received power is less than or equal to a threshold value or is relatively low among the plurality of first resources, and transmitting first report information that includes information specifying the second resource.

### REFERENCE SIGNS LIST

- 101: Base station
- 102: Base station
- 110: Antenna
- 120: Wireless communication unit
- 121: Signal transmission unit
- 122: Signal reception unit
- 130: Network communication unit
- 140: Storage unit
- 150: Control unit
- 151: Transmission unit
- 152: Reception unit
- 201: Terminal
- 210: Antenna
- 220: Wireless communication unit
- 221: Signal transmission unit
- 222: Signal reception unit
- 240: Storage unit
- 250: Control unit
- 300: Core network
- 400: Packet data network
- 1000: Base station
- 1000A: Base station
- 1000B: Base station
- 2000: Terminal
- 2000A: Terminal
- 2000B: Terminal

## Claims

1. A base station comprising:
a transmission unit configured to transmit setting information that gives an instruction on measurement of received power of a first reference signal for interference measurement transmitted using each of a plurality of first resources; and
a reception unit configured to receive first report information that includes information specifying, among the plurality of first resources, a second resource for which the received power is lower than or equal to a threshold value or is relatively low.

2. The base station according to claim 1, wherein
the setting information includes the threshold value and includes information giving an instruction on use of the threshold value.

3. The base station according to claim 1, wherein
the transmission unit transmits a second reference signal for quality measurement using a third resource different from the plurality of first resources, and
the threshold value is a value relatively defined with reference to a received power value of the second reference signal.

4. The base station according to claim 3, wherein
the threshold value is a value lower than the received power value of the second reference signal by a certain value.

5. The base station according to claim 1, wherein
the setting information includes information giving an instruction on setting of the number of the second resources, specified by the first report information, to less than or equal to an upper limit value, and
the number of the second resources specified by the first report information is less than or equal to the upper limit value.

6. The base station according to claim 1, wherein
a plurality of the first reference signals transmitted using the plurality of first resources is transmitted through a plurality of different first beams.

7. The base station according to claim 6, wherein
the transmission unit transmits a second reference signal for quality measurement through a second beam using a third resource, and the setting information includes information giving an instruction on use of a third beam to receive the first reference signal transmitted through each of the first beams, the third beam having been used to receive the second reference signal transmitted through the second beam.

8. The base station according to claim 6, wherein
the transmission unit transmits second reference signals for quality measurement through a plurality of different second beams using a plurality of third resources, and
the setting information includes information giving an instruction on reception of the first reference signal transmitted through each of the plurality of the first beams by using a beam with received power of corresponding one of the second reference signals maximum or larger than or equal to a predetermined value among a plurality of third beams used to receive the second reference signals transmitted through the plurality of second beams.

9. The base station according to claim 8, wherein
the threshold value is a value lower than the received power of a beam with the received power maximum or larger than or equal to a predetermined value by a certain value.

10. The base station according to claim 1, wherein
the first report information includes an identification (ID) of the second resource as information specifying the second resource.

11. The base station according to claim 6, wherein
the first report information includes an ID of a first beam used for the second resource as information specifying the second resource.

12. The base station according to claim 6, wherein
the transmission unit transmits second reference signals for quality measurement through a plurality of second beams using a plurality of third resources,
the reception unit receives, for each of the second beams, second report information including information specifying a third beam used to receive corresponding one of the second reference signals,
the setting information gives an instruction on use of the third beam to receive the first reference signal that is transmitted through the first beam, and
the first report information includes information specifying the second resource for each of the third beams.

13. The base station according to claim 12, wherein
the information specifying the third beam includes an ID of the third beam.

14. The base station according to claim 12, wherein
the information specifying the second resource includes an ID of the second resource.

15. The base station according to claim 13, wherein
the information specifying the second resource includes an ID of the first beam used for the second resource.

16. The base station according to claim 1, wherein
the first reference signal is a signal transmitted by the base station or another base station different from the base station.

17. The base station according to claim 1, wherein
the transmission unit transmits the setting information to a communication device, and
the reception unit receives the first report information from the communication device.

18. A communication method, comprising:
transmitting setting information that gives an instruction on measurement of received power of a first reference signal for interference measurement transmitted using each of a plurality of first resources; and
receiving first report information that includes information specifying, among the plurality of first resources, a second resource for which the received power is lower than or equal to a threshold value or is relatively low.

19. A communication device comprising:
a reception unit configured to receive setting information that gives an instruction on measurement of received power of a first reference signal for interference measurement transmitted using each of a plurality of first resources;
a control unit configured to measure received power of the first reference signal transmitted using the first resource; and
a transmission unit configured to detect a second resource for which the received power is less than or equal to a threshold value or is relatively low among the plurality of first resources, the transmission unit being configured to transmit first report information that includes information specifying the second resource.

20. A communication method, comprising:
receiving setting information that gives an instruction on measurement of received power of a first reference signal for interference measurement transmitted using each of a plurality of first resources;
measuring received power of the first reference signal transmitted using the first resource; and
detecting a second resource for which the received power is less than or equal to a threshold value or is relatively low among the plurality of first resources, and transmitting first report information that includes information specifying the second resource.
